# EUROPEAN PATENT SPECIFICATION

(11) **EP 1 552 645 B1**
(45) Date of publication and mention of the grant of the patent: **02.05.2007**
(21) Application number: 03738242.1
(22) Date of filing: 02.06.2003
(51) Int. Cl.: H04L 9/08

(54) **DATA PROCESSING APPARATUS AND METHOD**
DATENVERARBEITUNGSVORRICHTUNG UND VERFAHREN
APPAREIL ET PROCEDE DE TRAITEMENT DE DONNEES

(30) Priority: 31.05.2002 WO PCT/GB02/02512; 05.12.2002 GB 0228428; 05.12.2002 GB 0228434
(43) Date of publication of application: 13.07.2005
(73) Proprietor: SCIENTIFIC GENERICS LIMITED, Harston, Cambridgeshire CB2 5GG (GB)
(72) Inventor: DUFFY, D. G.; c/o Scientific Generics Limited, Harston, Cambridgeshire CB2 5GG (GB); JONES, A. W.; c/o Scientific Generics Limited, Harston, Cambridgeshire CB2 5GG (GB)
(74) Representative: Beresford, Keith Denis Lewis
(86) International application number: PCT/GB2003/002381
(87) International publication number: WO 2003/103216

(56) References cited:
- US-A- 6 038 315
- US-B1- 6 170 073
- US-B1- 6 219 794
- US-B1- 6 363 485

## Description

This invention relates to the generation of a number representative of data from an analogue source. The invention has particular, but not exclusive, relevance to generating a number representative of an individual by processing biometric data obtained by measuring a distinctive characteristic of the individual.

Every individual has a number of distinctive characteristics (e.g. fingerprints, iris patterns and retinal patterns) having attributes which can be measured to generate biometric data representative of the individual, and these distinctive characteristics form the basis of many identification systems. Generally, during an enrolment process a reference set of biometric data is generated for an individual, and in a subsequent identification process a new set of biometric data is measured and compared with the reference set of biometric data. A positive identification is made if the new set of biometric data is sufficiently similar to, but not necessarily identical with, the reference set of biometric data. The reason why the newly measured set of biometric data need not be identical with the reference set of biometric data for a positive identification is that each time the same distinctive characteristic is measured, slightly different biometric data is generated due to the analogue nature (i.e. having values within a continuous range) of the measured attributes of the distinctive feature.

A paper entitled "On the relation of error correction and cryptography to an offline biometric based identification scheme", WCC99, Workshop on Coding and cryptography January 1999,Paris, France, describes generating a biometric value which is exactly reproducible on a regular basis by employing error detection and correction techniques. In particular, this paper describes measuring the iris of an individual during enrolment to obtain an array of binary digits (bits), and applying conventional error correction algorithms, as are commonly used in forward error correction (FEC) encoding in digital data communication, to generate corresponding check bits. During a subsequent identification, the iris of the individual is re-measured to form a new array of data bits, and then the error correction algorithm corrects the new array of data bits using the check bits generated during enrolment. A disadvantage of this system is that the check bits generated during enrolment must be stored, and could therefore be used to aid fraudulent use of the biometric value for the individual.

US 6,363,485 discusses a biometric authenticator which generates a secret key using first partial seed data generated from received biometric data and second partial seed data retrieved from a memory within the biometric authenticator. The second partial seed data comprises an error correction code which allows for a certain number of errors in the first partial seed data to be corrected. The second partial seed data is accessed by the user inputting a personal identification number.

US 6,219,794 discusses a method of reproducing a digital key using a biometric, such as a fingerprint. The digital key is linked to the biometric by a protective filter which in response to the input of a biometric generates a corresponding digital key.

US 6,038,315 discusses a method of generating a password for a user in which during enrolment each user is associated with one of a set of secret codewords, and a reference value for the user is calculated by applying an XOR operation on biometric data for the user and the secret codeword. During password recovery, a new biometric reading for the user is taken to generate new biometric data for the user, and an XOR operation is performed on the new biometric data and the reference value for the user to generate an approximation of the secret codeword. The set of secret codewords are separated by Hamming distances which are sufficiently large that only one of the set will be close to the approximation of the secret codeword, and this one is used as the codeword.

US 6,170,073 discusses a method of transmitting speech over a wireless communications system. A frame of speech is converted into a number of speech parameters, and these speech parameters are split into groups in accordance with their importance in making the speech intelligible. An error detection code is calculated for each group of speech parameters, and then the speech parameters and error detection codes are error correction encoded.

An object of the present invention is to provide alternative schemes using error correction algorithms to enable a repeatable value to be derived from data obtained by measuring an analogue data source.

According to an aspect of the invention, there is provided a method of generating a number representative of an analogue data source together with error correction data for said number as claimed in claim 1.

According to another aspect of the invention, there is provided a method of generating a number representative of an analogue data source as claimed in claim 7.

According to a further aspect of the invention, there is provided an apparatus for generating a number representative of an analogue data source together with error correction data for said number as claimed in claim 18.

According to another aspect of the invention, there is provided an apparatus for generating a number representative of an analogue data source as claimed in claim 24.

As the likelihood of errors occurring in the higher significant bits of the data elements is less than in the lower significant bits, the lower significant bits are processed using an error correction technique having a higher power of error correction than a different error correction technique which is used for the higher significant bits. In this way, the amount of error correction data required can be minimised.

Various embodiments of the invention will now be described with reference to the accompanying Figures in which:
Figure 1 schematically shows the main components of a number generation system;
Figure 2 schematically shows the main components of a number generator and process data forming part of the number generation system illustrated in Figure 1;
Figure 3 schematically shows the main components of a source data splitter forming part of the number generator illustrated in Figure 2;
Figure 4 schematically shows the main components of an error correction data generator forming part of the number generator illustrated in Figure 2;
Figure 5 schematically shows the main components of a number regenerator forming part of the number generation system illustrated in Figure 1, together with the main components of the process data;
Figure 6 schematically shows the main components of a source data splitter forming part of the number regenerator illustrated in Figure 5;
Figure 7 schematically shows the main components of an error corrector forming part of the number regenerator system illustrated in Figure 5;
Figure 8 shows the main components of a number generator which forms part of a first alternative number generation system;
Figure 9 shows the main components of a number regenerator which forms part of the first alternative number generation system;
Figure 10 shows the main components of a number generator which forms part of a number generation system according to the invention;
Figure 11 shows the main components of a number regenerator which forms part of a number generation system according to the invention; and
Figure 12 shows the main components of an error corrector forming part of the number regenerator illustrated in Figure 11.

### FIRST ILLUSTRATIVE EXAMPLE (included for reference purposes only)

### OVERVIEW

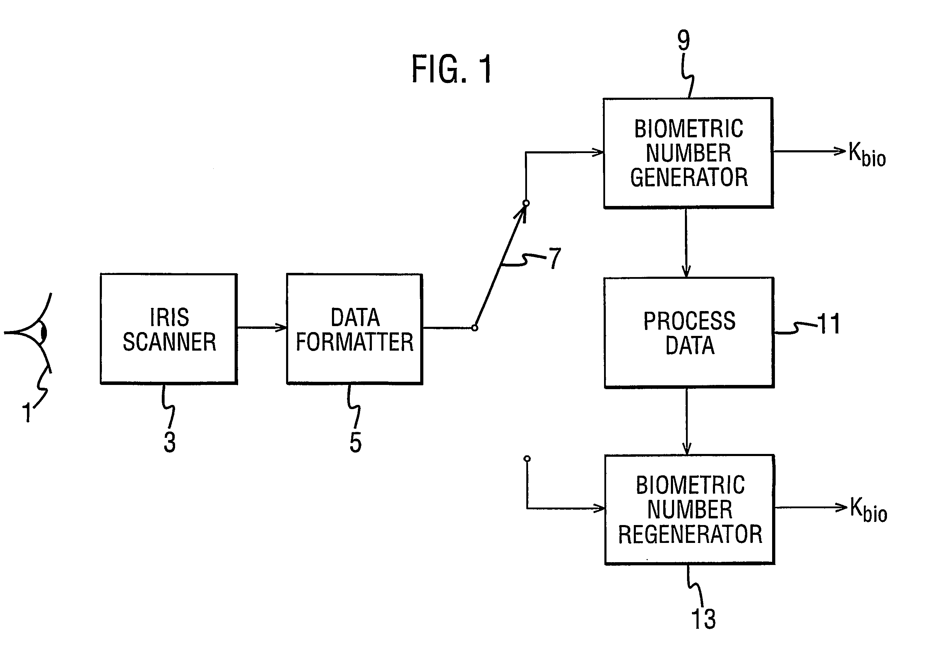

Figure 1 schematically shows the main components of a system for generating a biometric number K_{bio} from the iris pattern of an eye 1 of a human being. As shown, an iris scanner 3 records an image of the eye 1 and outputs corresponding image data to a data formatter 5, which configures the image data into a standard format. In this illustrative example, the data formatter 5 processes the image data using the image processing techniques described in US Patent No. 5,291,560 to form an iris code comprising four thousand and ninety-two bits arranged in a five hundred and twelve by eight array. During enrolment, a switch 7 directs the iris code generated by the data formatter 5 to a biometric number generator 9, which processes the iris code to generate a biometric number K_{bio} and process data 11 which is stored for use in a subsequent biometric number regeneration operation. In particular, as will be described in more detail hereafter, the biometric number generator 9 splits the iris code into two parts, uses the first part to generate the biometric number K_{bio} and error correction data, and uses the second part to transform the error correction data to generate transform data which is stored as part of the process data 11.

During a biometric number regeneration operation, iris scanner 3 records a new image of the eye 1, and the data formatter 5 configures the resultant image data to produce a new iris code. The switch 7 directs the new iris code produced by the data formatter 5 to a biometric number regenerator 13 which, using the process data 11, regenerates the biometric K_{bio}.

The operation of the biometric number generator 9 during enrolment and the biometric number regenerator 13 during the regeneration of the biometric number K_{bio} will now be described in more detail.

### ENROLMENT MODE

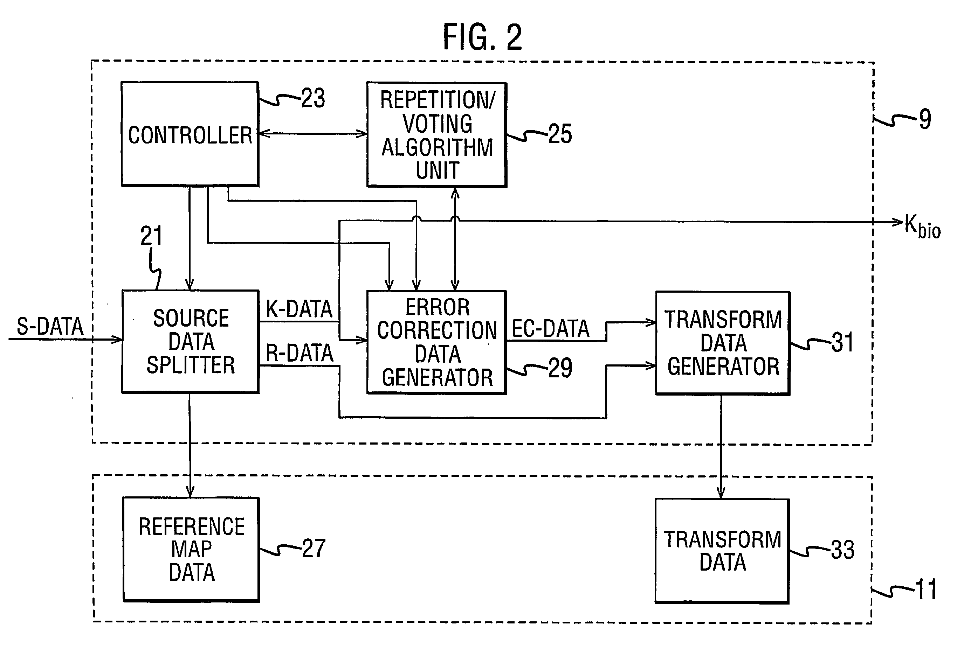

Figure 2 shows the main components of the biometric number generator 9 and the process.data 11. As shown, the number generator 9 comprises a source data splitter 21 which splits the bit stream of data from the iris code, hereafter called S-data, into two bit streams in accordance with control signals from a controller 23. In particular, the source data splitter 21 outputs a first data bit stream conveying data, hereafter called K-data, for forming the biometric number, and a second data bit stream conveying data, hereafter called R-data, for use in the generation of the transform data.

The relative proportions of S-data used for forming the K-data and the R-data are determined by the error correction algorithm applied by the biometric number generator 9. In this illustrative example, the error correction algorithm simply receives a single data bit of K-data, and outputs a corresponding codeword comprising the data bit followed by four check bits each having the same value as the received data bit. Therefore, if the error correction algorithm unit receives a data bit having a value "0", the error correction algorithm unit outputs the codeword "00000". This algorithm will hereafter be referred to as the repetition/voting algorithm, and is applied by a repetition/voting algorithm unit 25.

In general, any error correction algorithm receives a block of k bits of data, generates p check bits, and outputs a codeword having k+p bits. Therefore, for the repetition/voting algorithm used in this illustrative example, the k value is one and the p value is four.

One bit of R-data is required for each check bit in order to generate transform data. Therefore, in this illustrative example only one-fifth of the S-data can be used to form K-data because the remaining four-fifths are required to form R-data. In order to ensure that the source data splitter 21 splits the S-data into K-data and R-data in the correct proportions, the controller interrogates the repetition/voting algorithm unit 25 to determine the k and p values, and sends a control signal to the source data splitter indicative of the determined k and p values.

The source data splitter 21 also outputs reference map data 27, which forms part of the process data 11, indicating for each bit of the K-data and the R-data the location of the corresponding bit of S-data. In this way, during a subsequent number regeneration operation, it can be ensured that the same bits of S-data are used to form the K-data and the R-data as the enrolment process.

As well as being output by the number generator 9 to form the biometric number K_{bio}, the K-data bit stream is input to an error correction data generator 29, which is connected to the repetition/voting algorithm unit 25. In this illustrative example, the error correction data generator 29 sends each bit of K-data to the repetiaion/voting algorithm unit 25, extracts the check bits from the corresponding codewords returned by the repetition/voting algorithm unit 25, and outputs the extracted check bits as a stream of error correction data, hereafter called EC-data. The EC-data bit stream output by the error correction data generator 29 and the R-data bit stream output by the source data splitter 21 are input to a transform data generator 31, which applies a bitwise exclusive-OR operation to the EC-data bit stream and the R-data bit stream to generate transform data 33, which forms part of the process data 11.

As an example, for a sequence "100" of K-data, the corresponding EC-data bit stream is "111100000000". If the corresponding sequence of R-data is "101110100100", then the resulting transform data is "010010100100". It will be appreciated that, without knowledge of the corresponding R-data sequence, the EC-data cannot be recovered from the transform data and therefore the stored transform data 11 gives no information about the K-data which forms the biometric value K_{bio}.

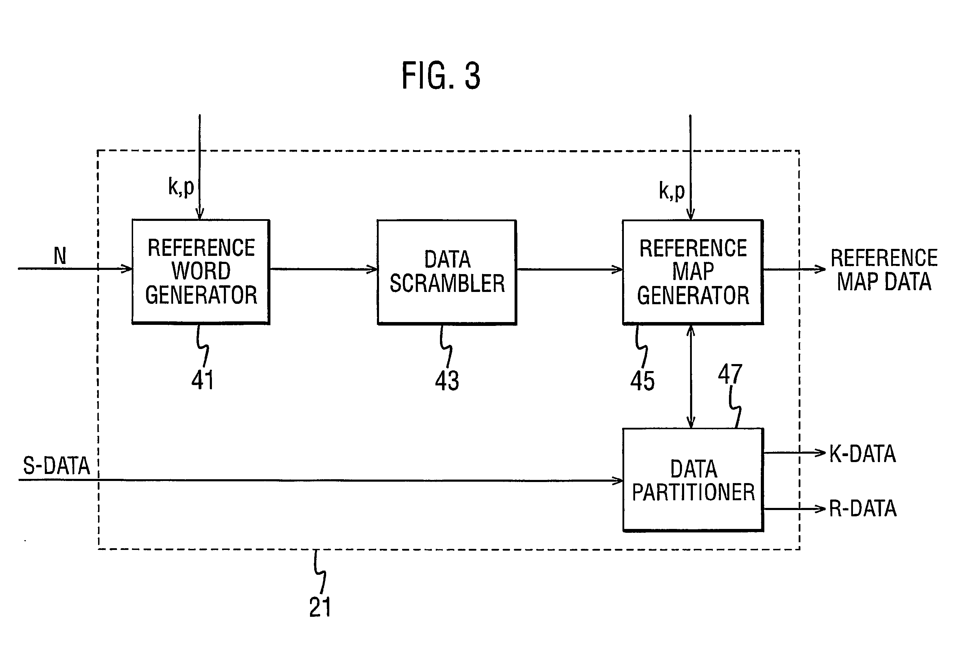

The source data splitter 21 will now be described in more detail with reference to Figure 3. As shown, the source data splitter 21 includes a reference word generator 41 which receives the number N of data elements in the iris code (in this illustrative example four thousand and ninety-two) and the control signal from the controller 23 indicating a k value of one and a p value of 4. The reference word generator 41 then generates a reference data stream having N data elements, with each data element comprising a map code indicting the position of that data element within the reference data stream. In particular, in this illustrative example the first data element of the reference data stream has a map code "0", the second data element has a map code "1", the third data element has a map code "2", and so on until the final data element which has a map code "4091".

The reference word generator 41 then partitions the reference data stream into a sequence of words, each word formed by k+p consecutive data elements, and discards any data elements at the end of the data stream which are not contained in a full word. Therefore, as in this embodiment k+p equals five, the reference word generator 41 separates the four thousand and ninety-two data elements into a sequence of eight hundred and eighteen words, each including five consecutive data elements, and discards the remaining two data elements.

The reference word generator 41 outputs the generated sequence of words to a data scrambler 43, which performs a pseudo-random scrambling of the data elements (i.e. a shuffling which appears random in nature but is in fact deterministic), and the shuffled data elements are output to a reference map generator 45, which forms a reference map indicating the position in the S-data of each bit of K-data and R-data. The reference map generator 45 receives the k and p values from the controller 23 in order to ensure that the correct amounts of S-data are apportioned to K-data and R-data.

The source data splitter 21 also includes a data partitioner 47, which receives and caches the bit stream of S-data from the data formatter 5. The data partitioner 47 then uses the reference map generated by the reference map generator 45 for the K-data and R-data bit streams. In particular, to form the K-data bit stream the data partitioner 47 looks up in the reference map data the location of the bit of the S-data bit stream which forms the first bit of the K-data, and outputs the value of the located bit, and so on for the second and subsequent bits of the K-data bit stream. The R-data bit stream is formed by the data partitioner 47 using the reference map data in an analogous way to the K-data bit stream. Therefore, in this illustrative example the data partitioner outputs a K-data bit stream comprising eight hundred and eighteen bits and a R-data bit stream comprising three thousand two hundred and seventy-two bits.

As stated previously, the data formatter 5 stores the iris code in the form of a bit array having eight rows and five hundred and twelve columns. Although there is a high level of randomness to the values of the bit array, in this embodiment the data in each column, which corresponds to a radial direction of the iris, shows a level of order. The data formatter 5 outputs the iris code column by column, and therefore neighbouring bits of the S-data bit stream show some measure of correlation. However, the pseudo-random scrambling performed by the data scrambler 43 disperses the data elements in each column and therefore increases the randomness of the K-data and R-data bit streams. A further advantage of dispersing the data elements in each column is that if there is a localised group of errors in the iris code, then it is easier to correct the group of errors after dispersion.

In this illustrative example, the data scrambler 43 performs two data scrambling operations. Firstly, the data scrambler 43 shuffles the words received by the reference word generator 41. The data scrambler 43 then forms an array by sequentially stacking the shuffled words. Therefore, in this illustrative example, the array is formed by eight hundred and eighteen rows each having five data elements. The data scrambler 43 then performs a rotational shifting operation of the data elements in each column. In this illustrative example, in the rotational shifting operation: the data elements of the first column remain in the same locations within the array; the data elements of the second column are shifted down the column one hundred and sixty-four places (i.e. are shifted by approximately one fifth of the size of the column) so that the first data element in the column becomes the one hundred and sixty-fifth data element in the column, and the bottom one hundred and sixty-four data element are shifted to the top of the column; in the same manner, the data elements of the third, fourth and fifth columns are shifted by three hundred and twenty-eight, four hundred and ninety-two and six hundred and fifty-six places respectively.

The data scrambler 43 outputs the array formed by the shuffling operation to the reference map generator 45, which separates the first k columns (i.e. in this illustrative example the first column) to provide the locations of the data elements in the S-data bit stream to form the K-data bit stream, and then uses the remaining p columns to provide the locations of the data elements in the S-data bit stream to form the R-data bit stream.

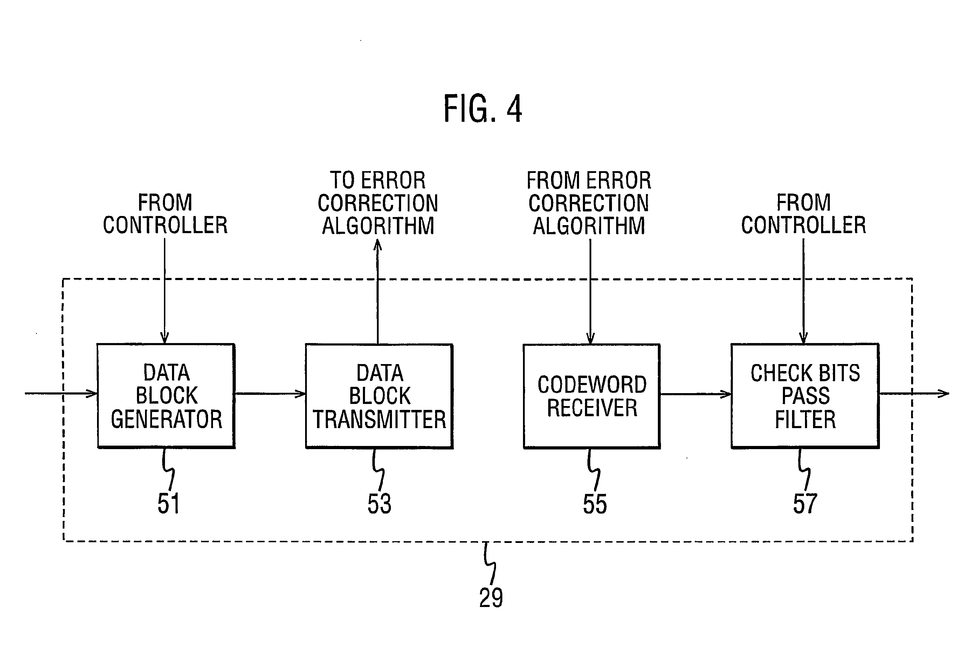

The error correction data generator 29 will now be described in more detail with reference to Figure 4. As shown, the K-data bit stream is input to a data block generator 51, together with a control signal from the controller 23 indicating the value of the number k of data bits to be included in each block of data bits sent to the repetition/voting algorithm unit 25. The data block generator 51 partitions the K-data bit stream into a sequence of data blocks having k (i.e. in this embodiment one) bit, and outputs the sequence of data blocks to a data block transmitter 53, which sequentially transmits the data blocks to the repetition/votiwg algorithm unit 25. For each data block transmitted, the repetition/voting algorithm unit 25 returns a codeword comprising the k data bits and p check bits. Each codeword is received by a codeword receiver 55, which forwards each received codeword to a check bits pass filter 57 which removes the k data bits and outputs the p check bits to form the EC-data bit stream.

### REGENERATION MODE

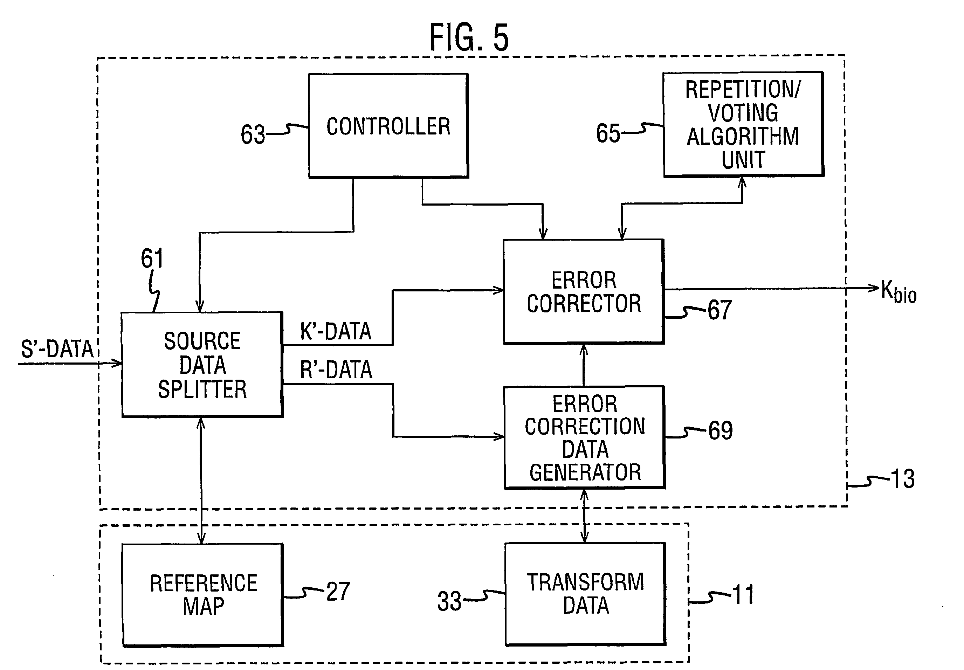

Figure 5 schematically shows the main components of the biometric number regenerator 13. As described previously, during regeneration a new image is formed of the eye 1 and the corresponding image data processed by the data formatter 5 to form a new iris code. As shown, a S'-data bit stream output by the data formatter 5 during enrolment is input to a source data splitter 61, which splits the S'-data bit stream into a K'-data bit stream and a R'-data bit stream in accordance with a control signal from a controller 63 and using the reference map data 27 forming part of the process data 11 generated during enrolment. The control signal from the controller 63 conveys the values of k and p associated with a repetition/voting error correction algorithm unit 65 (i.e. a k value of one and a p value of four), which is connected to the controller 63.

The K'-data bit stream and the R'-data bit stream are input to an error corrector 67 and an error correction data generator 69 respectively. The error correction data generator 69 applies a bitwise exclusive-OR operation to the R'-data bit stream and the transform data 33 generated during enrolment, to form an EC'-data bit stream, which is input to the error corrector 67. The error corrector 67 forms a sequence of codewords using the K'-data bit stream and the EC'-data bit stream and outputs each codeword to the repetition/voting algorithm unit 65. In this illustrative example, each codeword is formed by one bit from the K'-data bit stream followed by four bits from the EC'-data bit stream. For each received codeword, the repetition/voting algorithm unit 65 performs a voting operation to determine which bit value appears more often (hereafter called the majority bit value), converts all of the bits of the codeword to the determined majority bit value to form a converted codeword, and outputs the converted codeword.

For example, as described above if during enrolment the K-data bit stream has a sequence 100 and the corresponding sequence of the R-data bit stream is "101110100100", then the stored transform data is "010010100100". In a subsequent regeneration operation, the generated K'-data and R'-data bit streams normally exhibit a number of differences from those generated during enrolment, and a typical example of corresponding bit sequences for the K'-bit stream and the R'-bit stream would be "101" and "100110001100" respectively. The error correction data generator 69 applies a bitwise exclusive-OR operation on the R'-data bit stream and the corresponding stored transform data to generate the EC'-data sequence "110100101000".

The error corrector 67 combines each bit of the K'-data bit sequence with the corresponding four bits of the EC'-data bit stream to form the following three codewords:

| | |
|---|---|
| codeword 1 - | 11101 |
| codeword 2 - | 00010 |
| codeword 3 - | 11000 |

The codewords are then sequentially sent to the repetition/voting algorithm unit 65, which sets all the bits of each codeword to the majority bit value for the codeword, and returns the corrected codewords:

| | |
|---|---|
| corrected codeword 1 - | 11111 |
| corrected codeword 2 - | 00000 |
| corrected codeword 3 - | 00000 |

From the corrected codewords, the error corrector 67 retrieves the data bits to form the corrected K'-data bit sequence "100", which is identical with the corresponding K-bit sequence generated during enrolment.

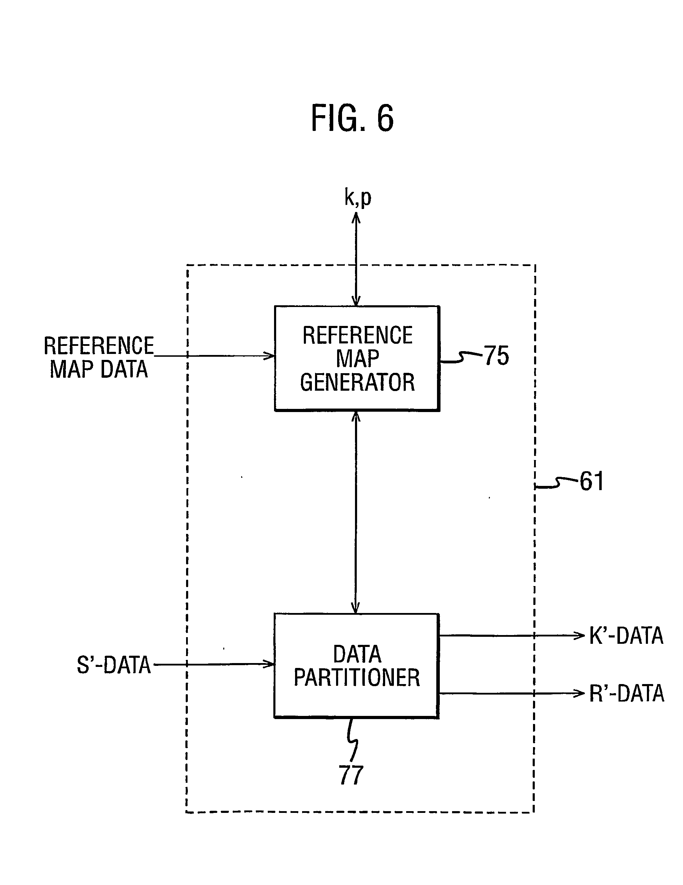

Figure 6 shows the main components of the source data splitter 61. The control signal from the controller 63 indicating the values of k and p, which as described above are one and four respectively in this illustrative example, are input to a reference map generator 75 together with the reference map data 27. The reference map generator 75 generates a reference map indicating for each bit of the K'-data and R'-data bit streams the location of the corresponding bit of the S'-data bit stream.

The S'-data bit stream is input to a data partitioner 77 which caches the S'-data bit stream, and then outputs the K'-data bit stream and the R'-data bit stream using the reference map provided by the reference map generator 75. In particular, for each bit of the K'-data and the R'-data bit streams, the data partitioner 77 identifies and outputs the corresponding bit of the S'-data bit stream using the reference map.

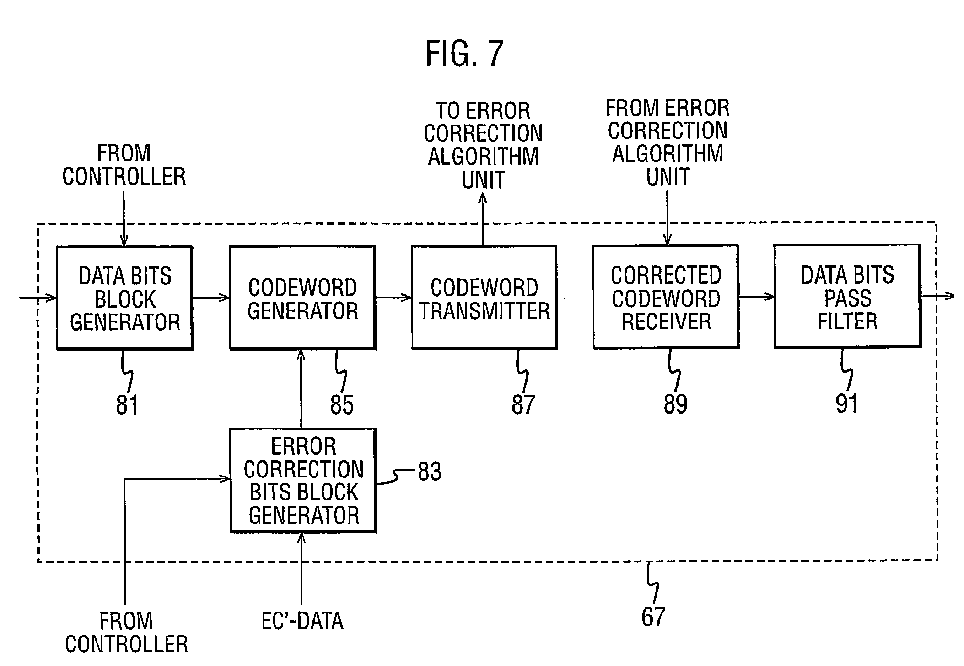

Figure 7 shows the main components of the error corrector 67. As shown the K'-data bit stream is input to a data bits block generator 81 which groups the K'-data into blocks of k bits, the value of k being provided by a control signal from the controller 63. Similarly, the EC'-data is input to a error correction bits block generator 83 which groups the EC'-data into blocks of p bits, with the value of p being provided by a control signal from the controller 63. The data bit blocks and the error correction bits blocks are sequentially input to a codeword generator 85, which concatenates each data bit block with the corresponding error correction bit block to form a codeword.

The codeword generator 85 sequentially outputs the generated codewords to a codeword transmitter 87, which transmits each codeword to the repetition/voting algorithm unit 65. The corrected codewords produced by the repetition/voting algorithm unit 65 are received by a corrected codeword receiver 89 and forwarded to a data bits pass filter 91, which removes the check bits of the codeword and outputs the corrected data bits to form the biometric number K_{bio}.

### SECOND ILLUSTRATIVE EXAMPLE (included for reference purposes only)

### OVERVIEW

In the first illustrative example, the iris code from the data formatter 5 is split into two parts. During enrolment, the first part is used to generate a biometric number K_{bio} and associated error correction data, and the second part is used to transform the error correction data to form transform data. During biometric number regeneration, the first part of the iris code is used to regenerate the biometric number, and the second part is used to revert the transform data back to error correction data. The error correction data is then used to correct errors in the regenerated biometric number.

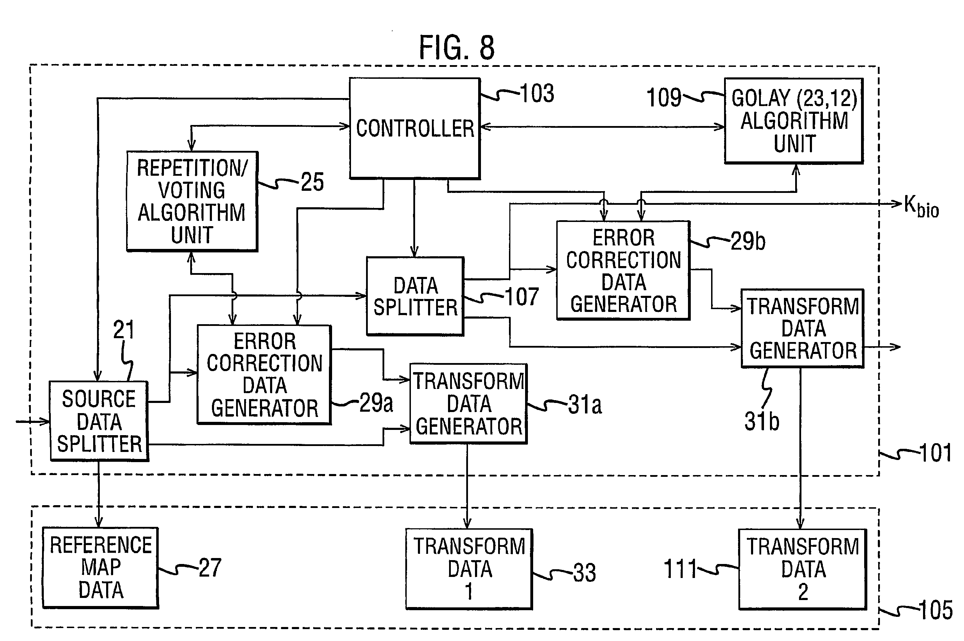

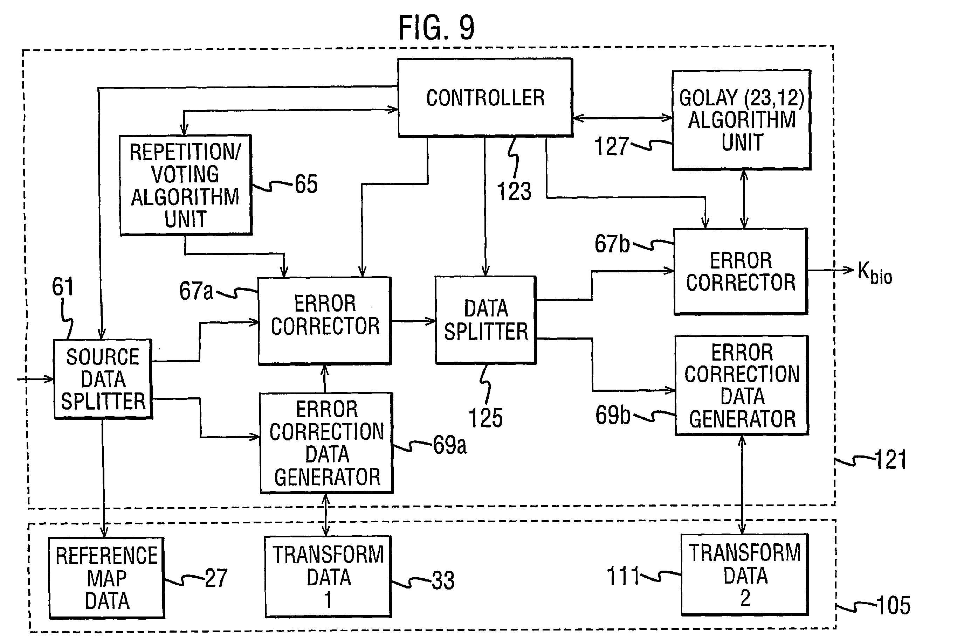

The generated biometric number K_{bio} has eight hundred and eighteen bits. With this size of biometric number, there may still be a significant possibility of errors in one or more of the bits. A second illustrative example will now be described, with reference to Figures 8 and 9, in which two passes of error correction are performed to reduce the likelihood of error in the biometric number K_{bio}. In Figures 8 and 9, components which are identical to corresponding components of the first illustrative example have been referenced by the same numerals and will not be described in detail again.

### ENROLMENT MODE

Figure 8 schematically shows the main components of a number generator 101 of the second illustrative example, which during enrolment receives S-data from a data formatter which is identical to the data formatter of the first embodiment. The S-data is input to a source data splitter 21, which is identical to the source data splitter 21 of the first illustrative example. In this illustrative example, the first pass of error correction uses a repetition/voting algorithm unit 25 which applies the same repetition/voting algorithm as described in the first illustrative example. A controller 103 interrogates the repetition/voting algorithm unit 25 to determine the associated k value and p value, and sends a control signal to the source data splitter 21 indicated the determined k and p values. Therefore, in this illustrative example the control signal received by the source data splitter 21 indicates that the value of k is one and the value of p is four.

The source data splitter 21 outputs a K₁-data stream and a R₁-data stream, together with reference map data 27 which forms part of process data 105, in the same manner as described in the first illustrative example. The K₁-data stream output by the source data splitter 21 is processed by the first error correction data generator 29a, using the repetition/voting algorithm unit 25, in the same manner as described in the first illustrative example to generate an EC₁-data stream. The R₁-data stream and the EC₁-data stream are then input into a first transform data generator 31a, which performs an exclusive-OR operation to generate a first set of transform data 33 which is stored as part of the process data 105.

In this illustrative example, the eight hundred and eighteen bits of K₁-data form intermediate source data which is processed in a similar manner to the S-data to generate the biometric number K_{bio} and a second set of transform data 105. In this illustrative example, a Golay (23,12) error correction algorithm, which is a conventional error correction algorithm used for FEC encoding in digital data communications is used during the processing of the K₁-data. For the Golay (23,12) error correction algorithm, a block of twelve data bits are processed to generate a block of eleven check bits, and the data bits and check bits are then combined to form a twenty-three bit codeword. Therefore, for the Golay (23,12) algorithm the value of k is twelve and the value of p is eleven.

The Golay (23,12) error correction algorithm is applied by a Golay (23,12) algorithm unit 109, and the controller interrogates the Golay (23,12) algorithm unit 109 to determined the k value of twelve and the p value of eleven. As shown in Figure 8, the K₁-data bit stream is input to a data splitter 107 together with a control signal from the controller 103 indicating the determined k and p values for the Golay (23,12) algorithm unit. The data splitter 107 partitions the K₁-data bit stream into blocks of twenty-three bits, and for each block outputs the first twelve bits as a sequence of a K₂-data bit stream and the remaining eleven bits as a sequence of a R₂-data bit stream. In this way, the eight hundred and eighteen bits of K₁-data form a four hundred and twenty bit sequence of K₂-data, which forms the biometric number K_{bio}, and a three hundred and eighty-five bit sequence of R₂-data. The final eighteen bits of K₁-data are discarded.

The K₂-data bit stream is input to a second error correction data generator 29b, together with a third control signal from the controller 103 conveying a k value of eleven and a p value of twelve. The second error correction data generator 29b is functionally identical to the error correction data generator of the first illustrative example. In particular, in accordance with the control signal from the controller 103, the second error correction data generator 29b partitions the K₂-data bit stream into blocks of twelve data bits and sends each block to the Golay (23,12) algorithm unit 109, which applies the Golay (23,12) algorithm to generate a twenty-three bit codeword comprising the twelve data bits and eleven check bits. The Golay (23,12) algorithm unit 109 outputs each codeword to the second error correction data generator 29b, which extracts the check bits from each codeword and outputs the extracted check bits as an EC₂-data bit stream.

The EC₂-data stream is input, together with the R₂-data bit stream, to a second transform generator 31b which applies a bitwise exclusive-OR operation to the EC₂-data bit stream and the R₂-bit stream to form second transform data 111, which is stored as part of the process data 105.

### REGENERATION MODE

Figure 9 schematically shows the main components of the number regenerator 121 of this illustrative example. The S'-data from the data formatter 5 is input to a source data splitter 61, which is identical to the source data splitter of the number regenerator of the first embodiment. A controller 123 interrogates a repetition/voting algorithm unit 65 to determine the associated k and p values, and outputs a control signal to the data splitter 61 indicating a k value of one and a p value of 4. The source data splitter 61 converts the S'-data into a K₁'-data bit stream and a R₁'-data bit stream in accordance with the control signal from the controller 123, using the reference map 27 in the process data 105 generated during enrolment.

The R₁'-data bit stream is input, together with the first set of transform data 33 of the process data 105 generated during enrolment, to a first error correction data generator 69a, which applies a bitwise exclusive-OR operation to generate an EC₁'-data bit stream. The K₁'-data and the EC₁'-data bit streams are input to an error corrector 67a which, in the same manner as in the first illustrative example, outputs a corrected K₁'-data bit stream using the repetition/voting algorithm unit 65, which applies the same repetition/voting error correction algorithm as the first illustrative example.

The eight hundred and eighteen bits of the corrected K₁'-data bit stream forms intermediate source data which is processed using a Golay (23,12) algorithm unit 127. The controller 123 interrogates the Golay (23,12) algorithm unit 127 and determines the associated k value of twelve and p value of eleven.

The K₁'-data bit stream is input to a data splitter 125 together with a control signal from the controller 123 indicating a k value of twelve and a p value of eleven. The data splitter 125 partitions the K₁'-data into a sequence of thirty five blocks of twenty-three bits, sequentially outputs the first twelve bits of each block as a K₂'-data bit stream, and sequentially outputs the remaining eleven bits of each block as a R₂'-data bit stream. The R₂'-data bit stream is input to a second error correction data generator 69b, together with the second set of transform data 111 stored in the process data 105 during enrolment. The second error correction data generator 69b applies a bitwise exclusive-OR operation to the R₂'-data bit stream and the second set of transform data 111 to form an EC₂'-data bit stream, which is input to a second error corrector 67b together with the K₂'-data bit stream.

The second error corrector 67b is functionally identical to the first error corrector 67a, and receives a control signal from the controller 123 indicating a k value of twelve and a p value of eleven. Accordingly, the second error corrector 67b partitions the K₂'-data into blocks of twelve bits and the EC₂'-data into blocks of eleven bits, and combines each block of K₂'-data with a corresponding block of EC₂'-data to form a codeword. The second error corrector 67b then sequentially transmits the codewords to the Golay (23,12) algorithm unit 127, which applies the Golay (23,12) error correction algorithm on each received codeword to generate a corrected codeword which is transmitted back to the error corrector 67b. As each corrected codeword is received, the second error corrector 67b extracts the data bits and outputs the extracted data bits to form the biometric number K_{bio}.

As described above, in the second illustrative example a second pass of error correction is applied to improve the repeatability of the biometric number K_{bio}, at the expense of reducing the number of bits of the biometric number K_{bio} because a larger proportion of the original S-data is effectively used to provide transform data for encoding the error correction data.

### FIRST EMBODIMENT

### OVERVIEW

In the first and second illustrative examples, an iris code is formed by the data formatter 5 having four thousand and ninety-two data elements, with each data element comprising a single bit. An alternative type data formatter is described in International Patent Application WO 02/098053. In particular, WO 02/098053 describes a feature template generator which extracts plural features from an image of an iris, with each feature having one or more attributes, and an attribute value stabiliser which uses data stored during enrolment to stabilise the respective values of the attributes. The resultant feature template is a forty-five by eighteen array of data elements, with each data element having a multi-bit value.

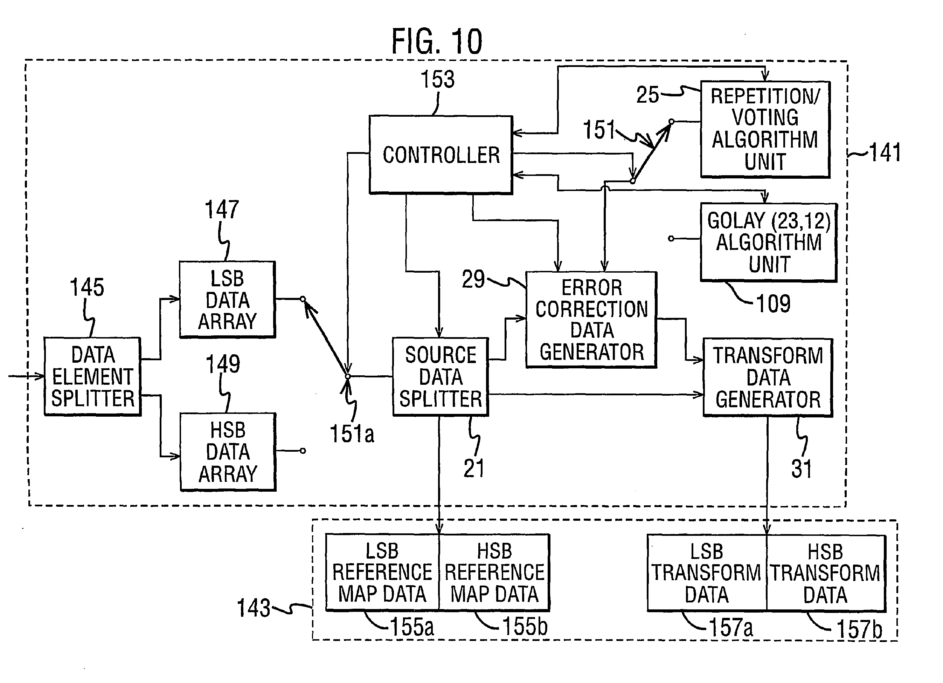

A first embodiment will now be described, with reference to Figures 10 to 12, in which the image data of the eye of an individual is configured by a data formatter as described in WO 02/098053 to produce a forty-five by eighteen array of data elements, with each data element having a multi-bit value. In figures 10 to 12, components which are identical to corresponding components of the first illustrative example have been referenced by the same reference numerals and will not be described in detail again.

A consequence of the multi-bit nature of the data elements is that there is a greater likelihood of an error in the lower significant bits than the higher significant bits. Therefore, in this embodiment the lower significant bits and the higher significant bits are processed using different error correction algorithms with the aim of reducing the amount of error correction data required to achieve a desired level of repeatability.

### ENROLMENT MODE

Figure 10 schematically illustrates the main components of a number generator 141 which in this embodiment processes the data array produced by the data formatter to generate a biometric number K_{bio} and process data 143 for use in a subsequent number regeneration operation.

The data from the data formatter is input to a data element splitter 145, which for each data element directs the least significant bit of the associated value to a LSB data array 147 and directs the next least significant bit of the associated value to a HSB data array 149. In this embodiment, any bits of the value of a data element above the second least significant bit are discarded. Both of the LSB data array 147 and the HSB data array 149 are therefore in the format of a forty-five by eighteen array of data elements with each data element comprising a single data bit.

In this embodiment, error correction data for the LSB data array 147 and the HSB data array 149 are processed separately using different error correction algorithms. In particular, the LSB data array 147 is processed using the repetition/voting error correction algorithm, and the HSB data array is processed using the Golay (23,12) error correction algorithm. As shown, a first switch 151a is positioned with the LSB data array 147 and the HSB data array 149 on one side of the first switch 151a, and a source data splitter 21 which is identical to the source data splitter of the first illustrative example on the other side of the first switch 151a. Further, a second switch 151b is positioned with an error correction data generator 29 on one side of the second switch 151b, and a repetition/voting error correction algorithm unit 25 and a Golay (23,12) error correction algorithm unit 109 on the other side of the second switch 151b,

Firstly, a controller 153 outputs control signals to set the first switch 151a so that the LSB data array 147 is connected to the source data splitter 21, and to set the second switch 151b so that the error correction data generator 29 is connected to the repetition/voting error correction algorithm unit 25. The controller 153 also extracts the k value of one and the p value of four from the repetition/voting algorithm unit 25, and sends corresponding control signals to the source data splitter 21 and the error correction data generator 29.

In the same manner as the first illustrative example, the source data splitter 21 separates the eight hundred and ten data bits from the LSB-data array 147 into one hundred and sixty-two K_{L}-data bits and six hundred and forty-eight R_{L}-data bits in accordance with a generated LSB reference map, and stores LSB reference map data 155a as part of the process data 143. The K_{L}-data bit stream is output to form part of the biometric number K_{bio}, and is also input to the error correction data generator 29 which generates an EC_{L}-data bit stream using the repetition/voting algorithm unit 25 as described in the first embodiment. The EC_{L}-data bit stream is input, together with the R_{L}-data bit stream, to a transform data generator 31 which performs a bitwise exclusive-OR operation to generate six hundred and forty eight bits of LSB transform data 157a which are stored as part of the process data 147.

After the LSB data array 147 has been processed, the controller 153 switches the first switch 151a and the second switch 151b so that the HSB data array 149 is connected to the source data splitter 21 and the error correction data generator 29 is connected to the Golay (23,12) algorithm unit 109. The controller 153 also extracts the k value of twelve and the p value of eleven from the Golay (23,12) algorithm unit, and sends corresponding control signals to the source data splitter 21 and the error correction data generator 29.

The source data splitter 21 separates the eight hundred and ten data bits from the HSB-data array 149 into four hundred and twenty K_{H}-data bits and three hundred and eighty-five R_{H}-data bits (the remaining five data bits being discarded) according to a generated HSB reference map, and stores HSB reference map data 155b as part of the process data 143. The K_{H}-data bit stream is output to form the remainder of the biometric number K_{bio}, and is also input to the error correction data generator 29, which generates an EC_{H}-data bit stream using the Golay (23,12) algorithm unit 109. The error correction data generator 29 outputs an EC_{H}-data bit stream which is input, together with the R_{H}-data bit stream, to the transform data generator 31, which performs a bitwise exclusive-OR operation to generate three hundred and eighty-five bits of HSB transform data 157b which are stored as part of the process data 143.

As described above, due to the lower likelihood of errors arising in the HSB data array 149 than in the LSB data array 147 during a subsequent number regeneration, the proportion of the data bits of the HSB data array 149 used to generate transform data is less than for the LSB data array 147.

### REGENERATION MODE

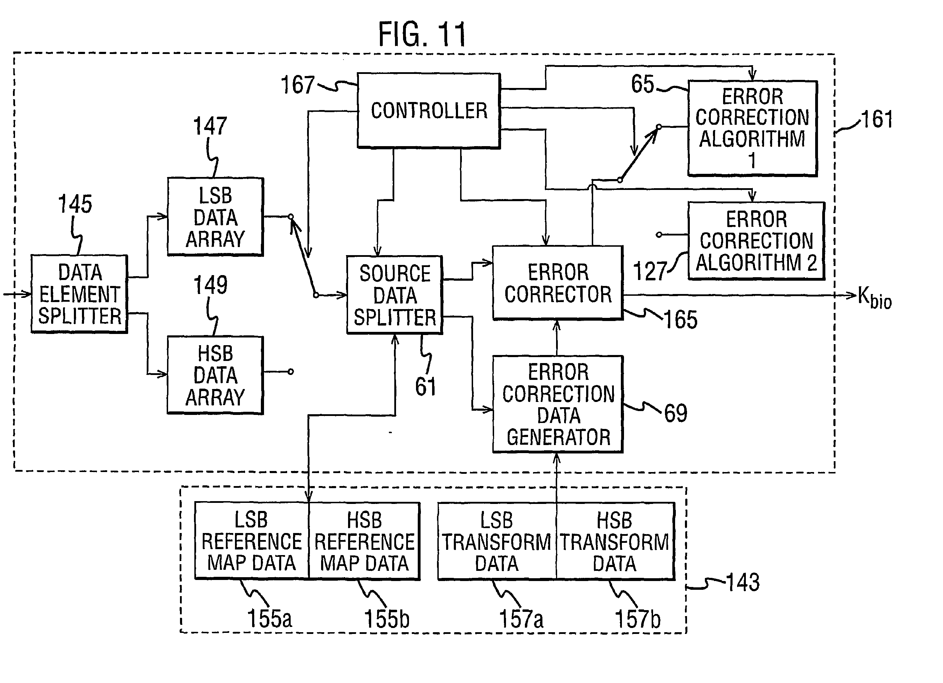

Figure 11 schematically shows the main components of a number regenerator 161 which is used to regenerate the biometric number K_{bio}, using the process data 143 generated during enrolment, from a data array produced by the data formatter from a scan of the eye of the individual.

In the same way as during enrolment, the data from the data formatter is input to a data element separator 145, which directs the lowest significant bit of each data element to a LSB data array 147, directs the next lowest significant bit to a HSB data array 149, and discards any remaining bits. As shown, a first switch 163a is positioned with the LSB data array 147 and the HSB data array 149 on one side, and a source data splitter 61 (which is identical to the source data splitter of the number regenerator of the first illustrative example) on the other side. Further, a second switch 163b is positioned with an error corrector 165 on one side, and a repetition/voting error correction algorithm unit 65 and a Golay (23,12) error correction algorithm unit 127 on the other side.

Firstly, a controller 167 outputs control signals to set the first switch 163a so that the LSB data array 147 is connected to the source data splitter 21, and to set the second switch 163b so that the error corrector 29 is connected to the repetition/voting error correction algorithm unit 25. The controller 153 also extracts a k value of one and the p value of four from the repetition/voting algorithm unit 25, and sends corresponding control signals to the source data splitter 21 and the error corrector 165.

The source data splitter 61 separates the eight hundred and ten data bits from the LSB-data array 147 into one hundred and sixty-two K_{L}'-data bits and six hundred and forty-eight R_{L}'-data bits in accordance with the LSB reference map data 155a stored in the process data 143. The K_{L}'-data bit stream and the R₁'-data bit stream are input to the error corrector 165 and an error correction data generator 69 respectively. The error correction data generator 69 applies a bitwise exclusive-OR operation to the R_{L}'-data bit stream and the LSB transform data 157a from the process data 143 generated during enrolment to generate an EC_{L}'-data bit stream which is input to the error corrector 165.

The error corrector 165 forms a sequence of codewords using the K_{L}'-data bit stream and the EC_{L}'-data bit stream and outputs corresponding codewords to the repetition/voting algorithm unit 65. When processing the LSB data array 147, each codeword is formed by one bit from the K_{L}'-data bit stream followed by four bits from the EC_{L}'-data bit stream. For each received codeword, the repetition/voting algorithm unit 65 generates and outputs a corrected codeword. The error corrector 165 sequentially receives the corrected codewords, removes the check bits, and outputs the remaining data bits to form part of the biometric number K_{bio}. As will be described in more detail hereafter, the error corrector 165 also compares each original codeword output to the repetition/voting algorithm unit 65 with the returned corrected codeword, and identifies which data bits have been changed. This information is subsequently used in the processing of the HSB data array 149.

After all the data bits of the LSB data array 147 have been processed, the controller 167 outputs control signals setting the first switch 163a to connect the HSB data array 149 and the source data splitter 21 and the second switch 163b to connect the error corrector 165 and the Golay (23,12) algorithm unit 127. The controller 163 also interrogates the Golay (23,12) algorithm unit 127 to recover the k value of eleven and the p value of twelve, and sends corresponding control signals to the source data splitter 61 and the error corrector 165.

The source data splitter 61 separates the eight hundred and ten data bits from the HSB-data array 147 into four hundred and twenty K_{H}'-data bits and three hundred and eighty-five R_{H}'-data bits in accordance with the HSB reference map data 155b stored in the process data 143. The K_{H}'-data bit stream and the R_{H}'-data bit stream are input to the error corrector 165 and the error correction data generator 69 respectively. The error correction data generator 69 applies a bitwise exclusive-OR operation to the R_{H}'-data bit stream and the HSB transform data 157b from the process data 143 generated during enrolment to generate an EC_{H}'-data bit stream which is input to the error corrector 165.

The error corrector 165 forms a sequence of codewords using the K_{H}'-data bit stream and the EC_{H}'-data bit stream and outputs corresponding codewords to the Golay (23,12) algorithm unit 127. When processing the HSB data array 149, each codeword is formed by twelve bits from the K_{H}'-data bit stream followed by eleven bits from the EC_{H}'-data bit stream. For each received codeword, the Golay (23,12) algorithm unit 127 generates and outputs a corrected codeword. The error corrector 165 receives the corrected codewords, and uses the corrected codewords to form the remaining bits of the biometric number K_{bio}.

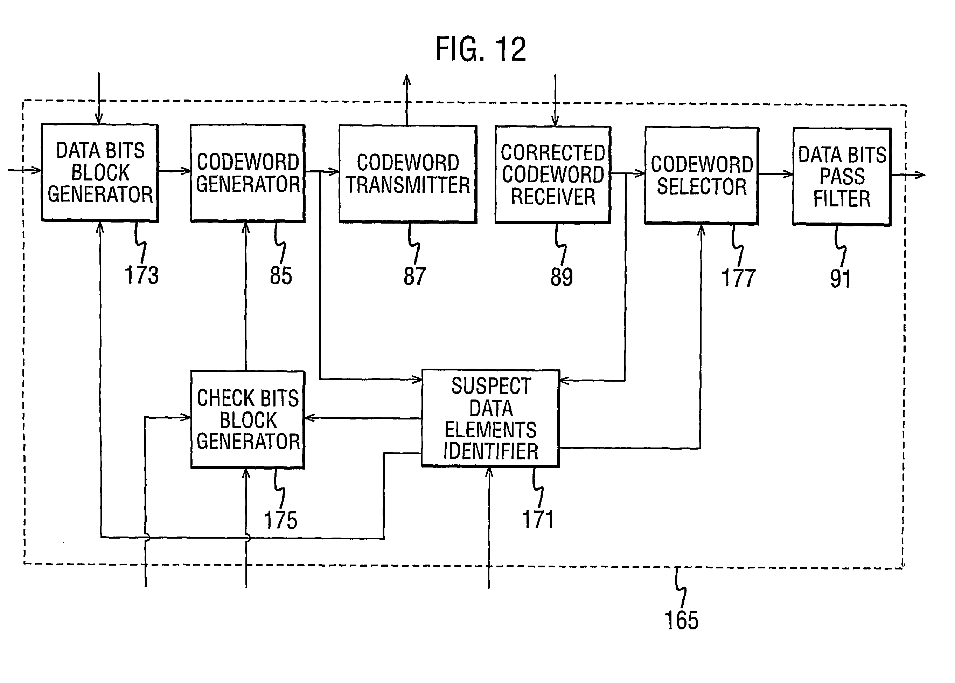

The operation of the error corrector 165 will now be described in more detail with reference to Figure 12. In this embodiment, the error corrector 165 includes a suspect data elements identifier 171 which during the processing of the LSB data array 147 identifies the data bits whose values are corrected by the repetition/voting algorithm unit 25. If the lowest significant bit of a data element is incorrect, then there is a higher likelihood that the next lowest significant bit of that data element is also incorrect. The knowledge of the position of these suspect data elements is used during the processing of the HSB data array 149. This allows a reduced amount of error correction data to be generated and stored during enrolment, and consequently allows the biometric number K_{bio} to have an increased number of bits.

During processing of the LSB data array 147, the K_{L}'-data bit stream is input to a data bits block generator 173 which, in accordance with a control signal from the controller 167 indicating a k value of one, outputs the K_{L}'-data in blocks of one data bit to a codeword generator 85. The EC_{L}'-data is input to a check bits block generator 175 which, in accordance with a control signal from the controller 167 indicating a p value of four, outputs the R_{L}'-data to the codeword generator 85 in blocks of four check bits. The codeword generator 85 forms a codeword by concatenating each data bit with the corresponding block of four check bits, and outputs the generated codeword to a codeword transmitter 87 and to the suspect data elements identifier 171. The codeword transmitter 87 outputs each generated codeword to the repetition/voting algorithm unit 65, and a corrected codeword receiver 89 receives a returned corrected codeword. Each received corrected codeword is input to the suspect data elements identifier 171 and to a codeword selector 177, which during processing of the LSB data array 147 simply transmits each corrected codeword to a data bits pass filter 91 which removes the check bits and outputs the remaining data bits to form part of the biometric number K_{bio}.

During processing of the LSB data array 147, each codeword is compared to the corresponding corrected codeword by the suspect data elements identifier 171 to identify which bits have been corrected. For each corrected bit identified, the suspect data elements identifier 171 identifies the corresponding data element of the LSB data array 147 using the LSB reference map data 155a, then identifies the location of the bit of the K_{H}'-data or EC_{H}'-data which corresponds to the identified data element using the HSB reference map data 155b, and then tags that data bit location as a suspect data bit.

During processing of the HSB data array 149, the K_{H}'-data bit stream is input to a data bits block generator 173 which, in accordance with a control signal from the controller 167 indicating a k value of twelve, partitions the K_{H}'-data into blocks of twelve data bits. Similarly, the EC_{H}'-data bit stream is input to a check bits block generator 175 which, in accordance with a control signal from the controller 167 indicating a p value of eleven, partitions the EC_{H}'-data into blocks of eleven bits.

For each block of K_{H}'-data and corresponding block of EC_{H}'-data, the suspect data elements identifier 171 determines the total number S of suspect bits. The suspect data elements identifier 171 then controls the data bits block generator 173 and the check bits block generator 175 to output data bit blocks and check bit blocks so that the codeword generator 85 outputs test codewords with every possible combination of values of the suspect bits, so that the codeword generator 85 generates 2^{s} different test codewords. The generated test codewords are input to the codeword transmitter 87, and the 2^{s} corrected test codewords received from the Golay (23,12) algorithm unit 109 are input to the codeword selector 177, which compares the 2^{s} corrected codewords and outputs the codeword which appears most frequently to the data bits pass filter 91 which removes the check bits and outputs the remaining data bits to form part of the biometric number K_{bio}.

For example, if a data bits block and a check bits block contain between them three suspect bits, then eight (i.e. 2^{s}) test codewords are generated, with the values of the suspect bits in the eight test codewords being assigned the values 0-0-0, 0-0-1, 0-1-0, 0-1-1, 1-0-0, 1-0-1, 1-1-0 and 1-1-1 respectively. The Golay (23,12) algorithm is able to correct three incorrect data bits and therefore, if the only differences between the test codewords and the corresponding original codeword generated during enrolment are in the suspect data bits, the Golay (23,12) algorithm unit 109 corrects all the differences and returns eight identical corrected code words. If, however, in the eight test codewords one of the bits other than the suspect bits is different from the corresponding bit of the corresponding original codeword, then four of the corrected codewords are identical, corresponding to the four of the test codewords in which two or three of the suspect bits have been assigned the correct value, with the remaining four corrected codewords generally having differing values. The codeword selector 177 then identifies the value of the four identical codewords, and outputs the identified value.

It will be noted that in the above example, although the Golay (23,12) algorithm is only able to correct three errors, potentially four errors were corrected (i.e. if all the received suspect data bits were incorrect). This is possible because of the processing of the LSB data array 147 provides additional information concerning the locations of possible errors.

### MODIFICATIONS AND FURTHER EMBODIMENTS

In the first embodiment, during number regeneration the suspect data elements identifier generates a fault map identifying data elements of the source data which contain errors in the lowest significant bit. This fault map is used in the first embodiment during the processing of higher significant bits of the suspect data elements in order to allow a reduced amount of error correction data to be used. Such a fault map could be used in a number of other ways to improve the reliability of number regeneration.

If the fault map indicates a cluster of errors associated with a common portion of the iris, then this may indicate that the recorded image of that portion of the iris is unsound, for example due to reflected light or by being obscured by eyelids or eyelashes. In an alternative embodiment, if the fault map does indicate such a cluster of errors, then the suspect data elements identifier tags all the data elements associated with the corresponding portion of the iris, even those whose values were not corrected, suspect. The number regenerator then re-processes the lowest significant bit data, and in the same manner as the first embodiment process the suspect data bits by creating multiple test codewords containing all possible combinations of values of the suspect bits, applying the error correction algorithm to all the test codewords, and selecting from the resulting corrected codewords the value which appears most frequently. In this way, the amount of error correction data needed to process the LSB data is reduced. It will be appreciated that such an arrangement may be applied to systems in which the data formatter configures the image data into data elements each having a single data bit, as in the first and second illustrative examples.

In another alternative embodiment, if the fault map indicates a cluster of errors corresponding to a common portion of the iris, then the number regenerator outputs a signal requesting that the eye is imaged again to generate new S-data. Preferably, the eye is imaged to provide replacement image data for just the suspect image portions, as the other image portions have already been judged sound.

The faults identified in the fault map could arise from a number of sources. As described above, the faults could be caused by a region of the iris being obscured during an image capture. Alternatively the faults could be caused by random measurement error. In both of these cases, the location of the faults on the fault map should vary in a random manner. Another source for the faults in the fault map is systemic error, and such faults are characterised by appearing in the same place within the fault map with high regularity.

In an embodiment, fault maps for a plurality of number regeneration operations are stored and compared to identify regularly occurring faults indicating systemic error. Preferably the fault maps are stored in an encrypted format. Further, in a preferred embodiment the biometric number K_{bio} is used as the cryptographic key of a symmetric encryption algorithm which is used to encrypt the fault maps.

If stored fault maps do indicate systemic error, then this information can be exploited in a number of ways to improve performance of the number generation system. In one embodiment, data elements within the source data which are affected by systemic error are identified from the fault maps, and are labelled as suspect. The processing of the suspect data elements is then performed as described above. In an alternative embodiment, additional transform data is used to transform the data elements exhibiting systemic error back to their enrolment values. In another alternative embodiment, if the stored fault maps indicate systemic error, then a new enrolment process is performed.

In the first embodiment, the S-data comprises a plurality of data elements with each data element having a multi-bit value. The lowest significant bits of the data elements are initially processed, and suspect data elements identified. In this way, the error correction of the higher significant bit can be made more efficient. It will be appreciated that the same technique can be applied to data which is not in binary format. It will also be appreciated that instead of processing only the least significant bit and the secondly significant bit of each data element, alternatively, other combinations of significant bits of the data element could be processed. For example, if each data element has a four bit value, of which the least significant bit is found to vary randomly between captures of source data, then the least significant bit can be discarded and the biometric number generated using the second and third least significant bits. It will be appreciated that more than two bits of a multi-bit data element can be processed to generate the repeatable number. In general, the lowest significant bits are first processed and a first fault map generated, the second least significant bits are then processed using the first fault map and a second fault map generated indicating errors in the second significant bits, the third significant bits are then processed using the second fault map and a third fault map generated indicating errors in the third significant bit, and so on to the most significant bit which is processed.

In the second illustrative example, the first pass of error correction is performed using a repetition/voting algorithm. This is generally preferred because the repetition/voting algorithm allows correction of a comparatively large number of errors, albeit at the expense of requiring a large amount of error correction data. A feature of the repetition/voting algorithm used is that each codeword includes a single data bit. This allows the K₁-data from the first pass of error correction to be separated into K₂-data and R₂-data without any data shuffling, because typically any errors in the K₁-data are randomly distributed.

A feature that is common to most error correction algorithms is that if the codeword contains more errors than the algorithm can correct, then the codeword generated by applying the algorithm includes at least as many errors as the original codeword. For example, if four errors are present in a twenty-three bit codeword for the Golay (23,12) algorithm, then the resultant codeword contains more than four errors. Such a concentration of errors is unlikely to be correctable in a second pass of error correction.

In an alternative to the second illustrative example, the Golay (23,12) algorithm is used to perform the first pass of error correction, and the BCH (32,21) algorithm is used for the second pass of error correction. In the number generator of this alternative example, the data splitter 107 of the number generator is replaced by a data splitter functionally identical to the source data splitter of the number generator of the first illustrative example. The source data splitter shuffles the data bits of the K₁-data bit stream and stores corresponding reference map data. The data splitter of the number regenerator is replaced by a source data splitter which is functionally identical to the source data splitter of the number regenerator of the first illustrative example. The source data splitter uses the stored reference map data to shuffle the data bits of the K₁'-data bit stream in the same manner as the data bits of the K₁-data bit stream were shuffled during enrolment. In this way, errors in the K₁-data bit stream are dispersed.

In the second illustrative example, the K₁-data effectively forms a first biometric number representative of the iris and the K₂-data forms a second biometric number representative of the iris, with the second biometric number having a higher repeatability but less binary digits. In an alternative example, the K₂-data is split into K₃-data and R₃-data, the K₃-data being used to form a third biometric number representative of the iris and the R₃-data being used to form redundant data for mapping error correction data corresponding to the third biometric number. In this way, three passes of error correction are performed. It will be appreciated that the only limit to the number of error correction passes performed is the amount of the original source data, as with each pass of error correction the resulting biometric number will have less binary digits.

It will be appreciated that the multiple pass error correction technique of the second illustrative example could also be applied to the multi-bit processing of the first embodiment. In particular, the biometric number generated from the LSB-data and/or the HSB-data could be split into new K-data and R-data for another pass of error correction. It will be appreciated that when multiple passes of error correction are performed, the same error correction algorithm could be used for each pass of error correction, or alternatively different error correction algorithms could be used for different passes of error correction.

In the illustrated examples and embodiments, during enrolment .a transform data generator applies a bitwise exclusive-OR operation to a stream of error correction data and a stream of redundant data (i.e, the R-data) to generate transform data, and during number regeneration an error correction data generator applies to bitwise exclusive-OR operation to a stream of redundant data (i.e. the R'-data) and the stored transform data to recover the error correction data. Alternative mapping operations could be performed to map between the error correction data and the transform data using redundant data without the transform data providing information on the biometric number K_{bio}. For example, a simple addition operation could be performed on the error correction data and the redundant data during enrolment, and a simple subtraction operation performed on the transform data and the redundant data during number regeneration. Such mapping operations are generically termed binomial mapping operations.

Generally, the redundant data and the error correction data is formed by a random distribution of approximately equal numbers of bits having a value "1" and bits having a value "0", in which case the randomness of the redundant data and error correction data is optimal. In some occasions, however, this may not be the case. For example, if the highest significant bit of a data element having multiple significant bits is processed, then it is possible that the majority of the redundant data will have a value "0". If this coincides with error correction data which predominantly has the value "0", then to improve security of the K-data and R-data the transform data may be generated by storing a series of instructions indicating how bits of redundant data can be inverted and/or re-ordered to form the error correction data. In this way, it is more difficult to extract useful information about the R-data and the error correction data from the transform data.

The multi-bit data element processing techniques described above could also be applied to a number generation system in which error correction data is directly stored (i.e. is not mapped into transform data).

In the illustrated examples and embodiments, a repetition/voting error correction algorithm is applied in which four check bits are assigned to each data bit. It will be appreciated that an alternative number of check bits could be used, although it is preferred that an even number of check bits is used to prevent any ties in the voting operation during number regeneration (i.e. the same number of data bits having value "0" as having value "1").

In the previously described examples and embodiments, the number generators and the number regenerators have been designed so that the error correction algorithm used can be changed simply by replacing the existing error correction algorithm unit by the error correction algorithm unit for the new error correction algorithm. The controller determines the k value and the p value associated with the new error correction algorithm unit, and outputs control signals ensuring that the data splitters apportion the S-data into K-data and R-data correctly, that the error correction data generator outputs blocks of k data bits to the error correction algorithm unit during enrolment, and that the error corrector outputs codewords having k data bits and p check bits to the error correction algorithm unit during number regeneration.

Examples of other error correction algorithms which could be used include the BCH (32,21) algorithm and the Hamming (8,4) algorithm.

In the illustrated examples and embodiments, when the source data is separated into K-data and R-data, in some cares some of the source data is discarded because the amount of source data does not correspond to an integer number of codewords. It will be appreciated that this discarded data could be constructively used. For example, error detection data could be generated for the biometric number K_{bio}, and the discarded source data used to map the error detection data into transform data.

In the illustrated examples and embodiments, during enrolment a source data splitter 61 generates a reference map indicating for the K-data and the R-data, the corresponding elements of the S-data. The reference map is stored and used by a source data splitter in a subsequent number regeneration operation. Alternatively, the source data splitter during enrolment could perform a predetermined shuffling operation, with the source data splitter being programmed to perform the same shuffling operation during number regeneration. In this way, there is no requirement to store the reference map. However, for embodiments in which a fault map identifying suspect data elements is formed during number regeneration, a reference map can be transiently formed during number regeneration to enable the suspect data elements to be tracked back to the original S-data locations.

In the previously described examples and embodiments, the source data is formed by imaging the iris of a human being. Alternatively, the source data could be formed by measuring other distinctive characteristics of an individual. For example, the source data could be formed by imaging a fingerprint or a retina of the individual. Alternatively, the source data could be formed by recording a sequence of utterances by the individual. Details of techniques for formatting biometric data from fingerprints and retina patterns can be found in International Patent Application WO 02/098053.

The source data (S-data) could be formed from a number of source data pools relating to the same distinctive feature. For example, the S-data could be formed by the combination of formatted data provided by the iris image data processing techniques described in US Patent No. 5,291,560 and WO 02/098053. Alternatively, the S-data could be formed from a number of source data pools representing different distinctive characteristics (e.g. iris pattern and fingerprint) of an individual. As another alternative, if a particular region of a source data pool was found to have a higher susceptibility to errors than the rest of the source data pool, then the data associated with this region could be separated off to form a separate source data pool.

Generally, each source data pool will have an associated error behaviour. For example, one source data pool may have an expected error rate of one bit in ten while another source data pool may have an expected error rate of one bit in six. In a preferred embodiment, a plurality of source data pools are processed by respective error correction algorithms, which generally will not be the same, to produce respective intermediate source data pools all having a substantially constant error performance. The intermediate source data pools are then combined, and an additional pass of error correction applied to the combined intermediate source data pool.

As described above, a wide variety of error correction algorithms can be used, in one or more passes of error correction, to process analogue data representative of an analogue data source to generate a number representative of the analogue data source. Preferably, the choice of error correction methodology is determined by predicting for a set of analogue data the fault rate for all possible error correction methodologies, and identifying the error correction methodology which provides the largest number with a predicted fault rate within a desired tolerance level. The error correction performance of each error correction methodology may be determined from the likelihood of errors in the source analogue data and the error correcting performance of the various error correction algorithms.

It will be appreciated that biometric data from other animals could be used to generate a biometric number. Further, some inanimate objects have distinctive features from which a physical value representative of the inanimate object can be derived. For example, analogue data may be generated by imaging an engraving or a jewel with an image sensor. Alternatively, a purpose-defined object having sharply defined, but random, geometric properties can be probed using ultrasound to generate analogue data.

Although in the illustrative examples and embodiments, the same apparatus is used both to carry out the enrolment process and the subsequent number regeneration, alternatively the enrolment process and the number regeneration process could be performed by separate devices. However, if the number regeneration is performed by a separate device to the enrolment, then the process data must be transferred from the enrolment apparatus to the number regeneration apparatus. This could be performed, for example, by transferring the process vector to a storage device (e.g. a floppy disc or a CD-ROM) which is moved to the number regeneration apparatus where the process vector is downloaded into the regeneration apparatus, or alternatively the enrolment apparatus and the number regeneration apparatus could be connected via a computer network, in which the process vector is transmitted across the computer network as an electrical signal.

The processing of the analogue data can either be performed by a hardware device, software running on a computer, or the processing could be split between a hardware device and software running on a computer. The invention is well suited to being implemented in software using an object oriented programming language such as Java or C++. In particular, each error correction algorithm can be implemented by a respective different one of a library of program objects which can be selectively addressed by an error correction data generator and an error corrector.

As described, as well as computer apparatus and processes performed in the computer apparatus, the invention also extends to computer programs, particularly computer programs on or in a carrier, adapted for putting the invention into practice. The computer program may be in the form of source code, object code, a code intermediate source and object code such as in partially compiled form, or in any other form suitable for use in the implementation of the processes according to the invention.

The carrier may be any entity or device capable of carrying the program. For example, the carrier may comprise a storage medium such as a ROM, for example a CD ROM or a semiconductor ROM, or a magnetic recording medium, for example a floppy disk or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means. Alternatively, the carrier may be an integrated circuit in which the program is embedded, the integrated circuit being adapted for performing, or for use in the performance of, the relevant processes.

## Claims

1. A method of generating a number representative of an analogue data source (1) together with error correction data for said number, the method comprising the steps of:
receiving analogue data representative of the analogue data source (1), said analogue data comprising a plurality of data elements each having a multi-digit value;
processing the received analogue data to form a plurality of groups of digits, each group of digits being formed by extracting from each data element of the analogue data the value of the digit in a respective different digit position of the multi-digit value;
forming a plurality of intermediate numbers, each intermediate number being formed by processing one or more of the groups of digits;
for each of the intermediate numbers, applying a respective error correction algorithm to form associated error correction data; and
generating said number representative of the analogue data source (1) by combining the plurality of intermediate numbers.

2. A method according to claim 1, wherein for at least two of the intermediate numbers, respective different error correction algorithms are applied to generate the corresponding error correction data.

3. A method according to claim 1 or 2, further comprising the steps of:
processing said groups of digits to form for each group of digits respective first and second data sets, wherein the first data sets are used to form the plurality of intermediate numbers;
for each intermediate number, generating transform data for transforming the second data set for the group of digits, or the second data sets associated with the groups of digits, associated with the intermediate number into the error correction data associated with the intermediate number; and
storing said transform data.

4. A method according to claim 3, comprising repeating the generation and storage of transform data plural times, with the first data set of one time forming the group of digits for the next time.

5. A method according to claim 4, wherein at least two of said plural times of generation and storage of transform data use different error correction algorithms.

6. A method according to any preceding claim, further comprising the steps of:
predicting a fault rate of the received analogue data; and
selecting an error correction methodology in accordance with the predicted fault rate.

7. A method of generating a number representative of an analogue data source (1), the method comprising the steps of:
receiving analogue data representative of the analogue data source, said analogue data comprising a plurality of data elements each having a multi-digit value;
processing the received analogue data to form a plurality of groups of digits, each group of digits being formed by extracting from each data element of the analogue data the value of the digit in a respective different digit position of the multi-digit value;
forming a plurality of intermediate numbers, each intermediate number being formed by processing one or more of the groups of digits;
for each intermediate number, recovering corresponding error correction data, and applying an error correction algorithm to the intermediate number and the corresponding error correction data to form a corrected intermediate number; and
combining said corrected intermediate numbers to form the number representative of the analogue data source (1).

8. A method according to claim 7, wherein for at least two of the intermediate numbers, respective different error correction algorithms are applied to the intermediate number and the corresponding error correction data to form corrected intermediate numbers.

9. A method according to claim 7 or 8, further comprising processing each of said groups of digits to form respective first and second data sets,
wherein the forming of the plurality of intermediate numbers comprises processing the first data sets, and
wherein said recovering of the error correction data comprises retrieving transform data from a data store and transforming the second data sets into error correction data using the retrieved transform data.

10. A method according to claim 9, further comprising the step of identifying the data elements of the analogue data which contain errors as suspect data elements.

11. A method according to claim 10, further comprising the steps of:
assigning all possible combinations of values to one or more digits of the suspect data elements;
for each combination of values, i) determining the resultant intermediate number and associated error correction data, and ii) applying the error correction algorithm to the resultant intermediate number to generate a corrected number; and
using the most common value of the corrected number to generate the number representative of the analogue source.

12. A method according to claim 10 or 11, further comprising storing data identifying the suspect data elements in order to track errors in the analogue data.

13. A method according to any of claims 9 to 12, comprising generating plural numbers representative of the analogue data source by using each generated number as the analogue data from which another representative number is generated, and in each number generation operation retrieving associated transform data.

14. A method according to claim 13, wherein at least two of the representative numbers are generated using different error correction algorithms.

15. A method according to any preceding claim,
wherein each data element of the analogue data is represented by a plurality of binary digits.

16. A storage device storing instructions including instructions for causing a programmable apparatus to perform a method according to any preceding claim.

17. A signal conveying instructions including instructions for causing a programmable apparatus to perform a method according to any of claims 1 to 15.

18. An apparatus for generating a number representative of an analogue data source (1) together with error correction data for said number, the apparatus comprising:
means for receiving analogue data representative of the analogue data source, said analogue data comprising a plurality of data elements each having a multi-digit value;
means (145) for processing the received analogue data to form a plurality of groups of digits, each group of digits being formed by extracting from each data element of the analogue data the value of the digit in a respective different digit position of the multi-digit value;
means for forming a plurality of intermediate numbers, each intermediate number being formed by processing one or more of the groups of digits;
means (25,109) for applying, for each of the intermediate numbers, a respective error correction algorithm to form associated error correction data; and
means for generating said number representative of the analogue source by combining the plurality of intermediate numbers.

19. An apparatus according to claim 18, wherein for at least two of the intermediate numbers, said applying means is operable to apply respective different error correction algorithms to generate the corresponding error correction data.

20. An apparatus according to claims 18 or 19, further comprising:
means (21) for processing each of said groups of digits to form respective first and second data sets, wherein the first data set is used to form an intermediate number;
means (31) for generating transform data for transforming said second data set or second data sets associated with an intermediate number into the error correction data associated with the intermediate number; and
means (157a,157b) for storing said transform data.

21. An apparatus according to claim 20, comprising means (107,29b,31b) for repeating the generation and storage of transform data plural times, with the first data set of one time forming the analogue data for the next time.

22. An apparatus according to claim 21, wherein said repeating means is operable to use different error correction algorithms for at least two of said plural times of generation and storage of transform data.

23. An apparatus according to any of claims 20 to 22, further comprising:
means for predicting a fault rate of the received analogue data; and
means for selecting an error correction methodology in accordance with the predicted fault rate.

24. An apparatus for generating a number representative of an analogue data source, the apparatus comprising:
means for receiving analogue data representative of the analogue data source, said analogue data comprising a plurality of data elements each having a multi-digit value;
means (145) for processing the received analogue data to form a plurality of groups of digits, each group of digits being formed by extracting from each data element of the analogue data the value of the digit in a respective different digit position of the multi-digit value;
means (61) for forming a plurality of intermediate numbers, each intermediate number being formed by processing one or more of the groups of digits;
means (69) for recovering, for each intermediate number, corresponding error correction data;
means (65,127) for correcting each intermediate number using the corresponding error correction data and an error correction algorithm to form a corrected intermediate number; and
means for combining said corrected intermediate numbers to form the number representative of the analogue source.

25. An apparatus according to claim 24, wherein said correcting means is operable to apply respective different error correction algorithms for at least two of the intermediate numbers.

26. An apparatus according to claim 24 or 25, further comprising means for processing each of said groups of digits to form respective first and second data sets,
wherein said forming means is operable to form the plurality of intermediate numbers by processing the first data sets, and
wherein said recovering means is operable to retrieve transform data from a data store for each group of digits, and to transform the second data sets into error correction data using the retrieved transform data.

27. An apparatus according to claim 26, wherein the data processor is operable to receive a generated number as a new set of analogue data in order to generate another representative number.

28. An apparatus according to claim 27, wherein at least two of the representative numbers are generated using different error correction algorithms.

29. An apparatus according to any of claims 26 to 28, further comprising a suspect data element identifier (171) operable to identify the data elements of the analogue data which contain errors as suspect data elements.

30. An apparatus according to claim 29, further comprising:
means for assigning all possible combinations of values to one or more digits of the suspect data elements;
wherein the error corrector is operable, for each combination of values, i) to determine the resultant intermediate number and associated error correction data, and ii) to apply the error correction algorithm to the resultant intermediate number to generate a corrected number, and iii) to select the most common value of the corrected number for generating the number representative of the analogue source.

31. An apparatus according to claim 29 or 30, further comprising a data store (155a,155b) operable to store data identifying the suspect data elements in order to track errors in the analogue data.

32. An apparatus according to any of claims 18 to 31, wherein each data element of the analogue data is represented by a plurality of binary digits.

## Patentansprüche

1. Verfahren zum Erzeugen einer für eine Analogdatenquelle (1) repräsentativen Zahl zusammen mit Fehlerkorrekturdaten für die Zahl, wobei in dem Verfahren
für die Analogdatenquelle (1) repräsentative Analogdaten empfangen werden, die mehrere Datenelemente aufweisen, die jeweils einen mehrstelligen Wert haben,
die empfangenen Analogdaten verarbeitet werden, um mehrere Zifferngruppen zu bilden, die jeweils **dadurch** erzeugt werden, daß von jedem Datenelement der Analogdaten der Wert der Ziffer in einer jeweils verschiedenen Ziffernposition des mehrstelligen Werts extrahiert wird,
mehrere Zwischenwerte gebildet werden, die jeweils durch Verarbeitung mindestens einer der Zifferngruppen gebildet werden,
für jeden Zwischenwert ein zugehöriger Fehlerkorrekturalgorithmus angewandt wird, um zugehörige Fehlerkorrekturdaten zu bilden, und
die für die Analogdatenquelle (1) repräsentative Zahl durch Kombinieren der mehreren Zwischenwerte erzeugt wird.

2. Verfahren nach Anspruch 1, wobei für wenigstens zwei der Zwischenwerte jeweils unterschiedliche Fehlerkorrekturalgorithmen angewandt werden, um die entsprechenden Fehlerkorrekturdaten zu erzeugen.

3. Verfahren nach Anspruch 1 oder 2, wobei ferner
die Zifferngruppen verarbeitet werden, um für jede Zifferngruppe jeweils eine erste und eine zweite Datenreihe zu bilden, wobei die ersten Datenreihen zum Bilden der mehreren Zwischenwerte verwendet werden,
für jeden Zwischenwert Transformationsdaten zum Transformieren der zweiten Datenreihe für die Zifferngruppe, oder der den Zifferngruppen zugeordneten zweiten Datenreihen, die dem Zwischenwert zugeordnet sind, in dem Zwischenwert zugeordnete Fehlerkorrekturdaten erzeugt werden, und
die Transformationsdaten gespeichert werden.

4. Verfahren nach Anspruch 3, wobei das Erzeugen und Speichern der Transformationsdaten mehrfach wiederholt wird, wobei die erste Datenreihe eines Vorgangs die Zifferngruppe für den nächsten Vorgang bildet.

5. Verfahren nach Anspruch 4, wobei für wenigstens zwei der mehrfachen Wiederholungen der Erzeugung und Speicherung der Transformationsdaten verschiedene Fehlerkorrekturalgorithmen verwendet werden.

6. Verfahren nach einem der vorstehenden Ansprüche, wobei ferner
eine Fehlerhäufigkeit der empfangenen Analogdaten vorausberechnet wird, und
eine Fehlerkorrekturmethodik gemäß der vorausberechneten Fehlerhäufigkeit ausgewählt wird.

7. Verfahren zum Erzeugen einer für eine Analogdatenquelle (1) repräsentativen Zahl, wobei in dem Verfahren
für die Analogdatenquelle (1) repräsentative Analogdaten empfangen werden, die mehrere Datenelemente aufweisen, die jeweils einen mehrstelligen Wert haben,
die empfangenen Analogdaten verarbeitet werden, um mehrere Zifferngruppen zu bilden, die jeweils **dadurch** erzeugt werden, daß von jedem Datenelement der Analogdaten der Wert der Ziffer in einer jeweils verschiedenen Ziffernposition des mehrstelligen Werts extrahiert wird,
mehrere Zwischenwerte gebildet werden, die jeweils durch Verarbeitung mindestens einer der Zifferngruppen gebildet werden,
für jeden Zwischenwert entsprechende Fehlerkorrekturdaten eingeholt werden und ein Fehlerkorrekturalgorithmus auf den Zwischenwert und die entsprechenden Fehlerkorrekturdaten angewandt wird, um einen korrigierten Zwischenwert zu bilden, und
die korrigierten Zwischenwerte kombiniert werden, um die für die Analogdatenquelle (1) repräsentative Zahl zu bilden.

8. Verfahren nach Anspruch 7, wobei für wenigstens zwei der Zwischenwerte jeweils verschiedene Fehlerkorrekturalgorithmen auf den Zwischenwert und die zugehörigen Fehlerkorrekturdaten angewandt werden, um korrigierte Zwischenwerte zu bilden.

9. Verfahren nach Anspruch 7 oder 8, wobei ferner jede der Zifferngruppen verarbeitet wird, um jeweils eine erste und eine zweite Datenreihe zu bilden,
wobei das Bilden der mehreren Zwischenwerte das Verarbeiten der ersten Datenreihen umfaßt, und
wobei das Einholen der Fehlerkorrekturdaten das Auffinden von Transformationsdaten aus einem Datenspeicher und das Transformieren der zweiten Datenreihen in Fehlerkorrekturdaten unter Verwendung der aufgefundenen Transformationsdaten umfaßt.

10. Verfahren nach Anspruch 9, wobei ferner die Datenelemente der Analogdaten, die Fehler enthalten, als verdächtige Datenelemente identifiziert werden.

11. Verfahren nach Anspruch 10, wobei ferner
alle möglichen Kombinationen von Werten auf eine oder mehrere Ziffern der verdächtigen Datenelemente zugeteilt werden,
für jede Kombination von Werten i) der resultierende Zwischenwert und die zugehörigen Fehlerkorrekturdaten bestimmt werden, und ii) der Fehlerkorrekturalgorithmus auf den resultierenden Zwischenwert angewandt wird, um eine korrigierte Zahl zu erzeugen, und
der häufigste Wert der korrigierten Zahl verwendet wird, um die für die Analogquelle repräsentative Zahl zu erzeugen.

12. Verfahren nach Anspruch 10 oder 11, wobei ferner die verdächtigen Datenelemente identifizierende Daten gespeichert werden, um Fehler in den Analogdaten nachzuverfolgen.

13. Verfahren nach einem der Ansprüche 9 bis 12, wobei mehrere für die Analogdatenquelle repräsentative Zahlen erzeugt werden, indem jede erzeugte Zahl als die Analogdaten verwendet wird, aus denen eine andere repräsentative Zahl erzeugt wird, und in jeder Zahlerzeugungsoperation zugehörige Transformationsdaten aufgefunden werden.

14. Verfahren nach Anspruch 13, wobei wenigstens zwei der repräsentativen Zahlen unter Verwendung unterschiedlicher Fehlerkorrekturalgorithmen erzeugt werden.

15. Verfahren nach einem der vorstehenden Ansprüche, wobei jedes Datenelement der Analogdaten durch mehrere binäre Ziffern repräsentiert wird.

16. Befehle speichernde Speichervorrichtung mit Befehlen, um ein programmierbares Gerät zum Ausführen eines Verfahrens gemäß einem der vorstehenden Ansprüche zu veranlassen.

17. Befehle übermittelndes Signal mit Befehlen, um ein programmierbares Gerät zum Ausführen eines Verfahrens gemäß einem der Ansprüche 1 bis 15 zu veranlassen.

18. Gerät zum Erzeugen einer für eine Analogdatenquelle (1) repräsentativen Zahl zusammen mit Fehlerkorrekturdaten für die Zahl, wobei Gerät aufweist:
eine Einrichtung zum Empfangen von für die Analogdatenquelle (1) repräsentative Analogdaten, die mehrere Datenelemente aufweisen, die jeweils einen mehrstelligen Wert haben,
eine Einrichtung (145) zum Verarbeiten der empfangenen Analogdaten, um mehrere Zifferngruppen zu bilden, die jeweils **dadurch** erzeugt werden, daß von jedem Datenelement der Analogdaten der Wert der Ziffer in einer jeweils verschiedenen Ziffernposition des mehrstelligen Werts extrahiert wird,
eine Einrichtung zum Erzeugen mehrerer Zwischenwerte, die jeweils durch Verarbeitung mindestens einer der Zifferngruppen gebildet werden,
eine Einrichtung (25, 109) zum Anwenden eines zugehörigen Fehlerkorrekturalgorithmus für jeden Zwischenwert, um zugehörige Fehlerkorrekturdaten zu bilden, und
eine Einrichtung zum Erzeugen der für die Analogdatenquelle (1) repräsentativen Zahl durch Kombinieren der mehreren Zwischenwerte.

19. Gerät nach Anspruch 18, wobei für wenigstens zwei der Zwischenwerte die Anwendeeinrichtung dazu betreibbar ist, jeweils unterschiedliche Fehlerkorrekturalgorithmen anzuwenden, um die entsprechenden Fehlerkorrekturdaten zu erzeugen.

20. Gerät nach Anspruch 18 oder 19, ferner mit
einer Einrichtung (21) zum Verarbeiten der Zifferngruppen, um für jede Zifferngruppe jeweils eine erste und eine zweite Datenreihe zu bilden, wobei die erste Datenreihe zum Bilden eines Zwischenwerts verwendet wird,
einer Einrichtung (31) zum Erzeugen von Transformationsdaten zum Transformieren der zweiten Datenreihe oder der zweiten Datenreihen, die dem Zwischenwert zugeordnet sind, in dem Zwischenwert zugeordnete Fehlerkorrekturdaten, und
einer Einrichtung (157a, 157b) zum Speichern der Transformationsdaten.

21. Gerät nach Anspruch 20, mit einer Einrichtung (107, 29b, 31b) zum mehrfachen Wiederholen des Erzeugens und Speicherns der Transformationsdaten, wobei die erste Datenreihe eines Vorgangs die Zifferngruppe für den nächsten Vorgang bildet.

22. Gerät nach Anspruch 21, wobei die Wiederholungseinrichtung dazu betreibbar ist, für wenigstens zwei der mehrfachen Wiederholungen der Erzeugung und Speicherung der Transformationsdaten verschiedene Fehlerkorrekturalgorithmen zu verwenden.

23. Gerät nach einem der Ansprüche 20 bis 22, ferner mit
einer Einrichtung zum Vorausberechnen einer Fehlerhäufigkeit der empfangenen Analogdaten, und
einer Einrichtung zum Auswählen einer Fehlerkorrekturmethodik gemäß der vorausberechneten Fehlerhäufigkeit.

24. Gerät zum Erzeugen einer für eine Analogdatenquelle repräsentativen Zahl, wobei Gerät aufweist:
eine Einrichtung zum Empfangen von für die Analogdatenquelle repräsentativen Analogdaten, die mehrere Datenelemente aufweisen, die jeweils einen mehrstelligen Wert haben,
eine Einrichtung (145) zum Verarbeiten der empfangenen Analogdaten, um mehrere Zifferngruppen zu bilden, die jeweils **dadurch** erzeugt werden, daß von jedem Datenelement der Analogdaten der Wert der Ziffer in einer jeweils verschiedenen Ziffernposition des mehrstelligen Werts extrahiert wird,
eine Einrichtung (61) zum Erzeugen mehrerer Zwischenwerte, die jeweils durch Verarbeitung mindestens einer der Zifferngruppen gebildet werden,
eine Einrichtung (69) zum Einholen entsprechender Fehlerkorrekturdaten für jeden Zwischenwert,
eine Einrichtung (65, 127) zum Korrigieren jedes Zwischenwerts unter Verwendung der entsprechenden Fehlerkorrekturdaten sowie eines Fehlerkorrekturalgorithmus, um einen korrigierten Zwischenwert zu bilden, und
eine Einrichtung zum Kombinieren der korrigierten Zwischenwerte, um die für die Analogquelle repräsentative Zahl zu bilden.

25. Gerät nach Anspruch 24, wobei die Korrektureinrichtung dazu betreibbar ist, für wenigstens zwei der Zwischenwerte jeweils verschiedene Fehlerkorrekturalgorithmen anzuwenden.

26. Gerät nach Anspruch 24 oder 25, ferner mit einer Einrichtung zum Verarbeiten jeder der Zifferngruppen, um jeweils eine erste und eine zweite Datenreihe zu bilden,
wobei die Erzeugungseinrichtung dazu betreibbar ist, die mehreren Zwischenwerte durch Verarbeiten der ersten Datenreihen zu bilden, und
wobei die Einholeinrichtung dazu betreibbar ist, Transformationsdaten aus einem Datenspeicher für jede Zifferngruppe aufzufinden, und die zweiten Datenreihen unter Verwendung der aufgefundenen Transformationsdaten in Fehlerkorrekturdaten zu transformieren.

27. Gerät nach Anspruch 26, wobei der Datenprozessor dazu betreibbar ist, eine erzeugte Zahl als eine neue Reihe von Analogdaten zu empfangen, um eine andere repräsentative Zahl zu erzeugen.

28. Gerät nach Anspruch 27, wobei wenigstens zwei der repräsentativen Zahlen unter Verwendung unterschiedlicher Fehlerkorrekturalgorithmen erzeugt werden.

29. Gerät nach einem der Ansprüche 26 bis 28, ferner mit einer Identifiziereinrichtung (171) für verdächtige Datenelemente, die dazu betreibbar ist, die Datenelemente der Analogdaten, die Fehler enthalten, als verdächtige Datenelemente zu identifizieren.

30. Gerät nach Anspruch 29, ferner mit
einer Einrichtung (21) zum Zuteilen aller möglichen Kombinationen von Werten auf eine oder mehrere Ziffern der verdächtigen Datenelemente,
wobei die Fehlerkorrektureinrichtung dazu betreibbar ist, für jede Kombination von Werten i) den resultierenden Zwischenwert und die zugehörigen Fehlerkorrekturdaten zu bestimmen, und ii) den Fehlerkorrekturalgorithmus auf den resultierenden Zwischenwert anzuwenden, um eine korrigierte Zahl zu erzeugen, und iii) den häufigsten Wert der korrigierten Zahl zu verwenden, um die für die Analogquelle repräsentative Zahl zu erzeugen.

31. Gerät nach Anspruch 29 oder 30, ferner mit einem Datenspeicher (155a, 155b), der dazu betreibbar ist, die verdächtigen Datenelemente identifizierende Daten zu speichern, um Fehler in den Analogdaten nachzuverfolgen.

32. Gerät nach einem der Ansprüche 18 bis 31, wobei jedes Datenelement der Analogdaten durch mehrere binäre Ziffern repräsentiert wird.

## Revendications

1. Procédé de production d'un nombre représentatif d'une source (1) de données analogiques conjointement à des données de correction d'erreur pour ledit nombre, le procédé comportant les étapes :
de réception de données analogiques représentatives de la source (1) de données analogiques, lesdites données analogiques comportant une pluralité d'éléments de données ayant chacun une valeur à plusieurs chiffres ;
de traitement des données analogiques reçues pour former une pluralité de groupes de chiffres, chaque groupe de chiffres étant formé en extrayant à partir de chaque élément de données des données analogiques la valeur du chiffre dans une position respective de chiffre différente de la valeur à plusieurs chiffres ;
de formation d'une pluralité de nombres intermédiaires, chaque nombre intermédiaire étant formé en traitant un ou plusieurs des groupes de chiffres ;
d'application, pour chacun des nombres intermédiaires, d'un algorithme de correction d'erreur respectif afin de former des données de correction d'erreur associées ; et
de production dudit nombre représentatif de la source (1) de données analogiques en combinant la pluralité de nombres intermédiaires.

2. Procédé selon la revendication 1, dans lequel pour au moins deux des nombres intermédiaires, des algorithmes de correction d'erreur différents respectifs sont appliqués pour produire les données de correction d'erreur correspondantes.

3. Procédé selon la revendication 1 ou 2, comportant de plus les étapes :
de traitement desdits groupes de chiffres pour former pour chaque groupe de chiffres des premier et deuxième ensembles de données respectifs, où les premiers ensembles de données sont utilisés pour former la pluralité de nombres intermédiaires ;
de production, pour chaque nombre intermédiaire, de données de transformation pour transformer le deuxième ensemble de données pour le groupe de chiffres, ou les deuxièmes ensembles de données associés aux groupes de chiffres, associé au nombre intermédiaire à l'intérieur des données de correction d'erreur associées au nombre intermédiaire ; et
de stockage desdites données de transformation.

4. Procédé selon la revendication 3, comportant plusieurs fois une répétition de la production et du stockage de données de transformation, avec le premier ensemble de données formant à un moment le groupe de chiffres pour le moment suivant.

5. Procédé selon la revendication 4, dans lequel au moins deux desdits plusieurs moments de production et de stockage de données de transformation utilisent différents algorithmes de correction d'erreur.

6. Procédé selon l'une quelconque des précédentes revendications, comportant de plus les étapes :
de prédiction d'un taux de défauts des données analogiques reçues ; et
de sélection d'une méthodologie de correction d'erreur conformément au taux de défauts prédit.

7. Procédé de production d'un nombre représentatif d'une source (1) de données analogiques, le procédé comportant les étapes :
de réception de données analogiques représentatives de la source de données analogiques, lesdites données analogiques comportant une pluralité d'éléments de données ayant chacun une valeur à plusieurs chiffres ;
de traitement des données analogiques reçues pour former une pluralité de groupes de chiffres, chaque groupe de chiffres étant formé en extrayant à partir de chaque élément de données des données analogiques la valeur du chiffre dans une position de chiffre différente respective de la valeur à plusieurs chiffres ;
de formation d'une pluralité de nombres intermédiaires, chaque nombre intermédiaire étant formé en traitant un ou plusieurs des groupes de chiffres ;
de récupération, pour chaque nombre intermédiaire, de données de correction d'erreur correspondantes, et d'application d'un algorithme de correction d'erreur au nombre intermédiaire et aux données de correction d'erreur correspondantes afin de former un nombre intermédiaire corrigé ; et
de combinaison desdits nombres intermédiaires corrigés pour former le nombre représentatif de la source (1) de données analogiques.

8. Procédé selon la revendication 7, dans lequel, pour au moins deux des nombres intermédiaires, des algorithmes de correction d'erreur différents respectifs sont appliqués au nombre intermédiaire ainsi qu'aux données de correction d'erreur correspondantes pour former des nombres intermédiaires corrigés.

9. Procédé selon la revendication 7 ou 8, comportant de plus un traitement de chacun desdits groupes de chiffres pour former des premier et deuxième ensembles de données respectifs,
où la formation de la pluralité de nombres intermédiaires comporte un traitement des premiers ensembles de données, et
où ladite récupération des données de correction d'erreur comporte une récupération de données de transformation à partir d'un magasin de données ainsi qu'une transformation des deuxièmes ensembles de données en des données de correction d'erreur en utilisant les données de transformation récupérées.

10. Procédé selon la revendication 9, comportant de plus l'étape d'identification des éléments de données des données analogiques qui contiennent des erreurs comme des éléments de données suspects.

11. Procédé selon la revendication 10, comportant de plus les étapes :
d'affectation de toutes les combinaisons possibles de valeurs à un ou plusieurs chiffres des éléments de données suspects ;
pour chaque combinaison de valeurs, i) de détermination du nombre intermédiaire résultant ainsi que des données de correction d'erreur associées, et ii) d'application de l'algorithme de correction d'erreur au nombre intermédiaire résultant afin de produire un nombre corrigé ; et
d'utilisation de la valeur la plus commune du nombre corrigé pour produire le nombre représentatif de la source analogique.

12. Procédé selon la revendication 10 ou 11, comportant de plus un stockage de données identifiant les éléments de données suspects afin de tracer des erreurs dans les données analogiques.

13. Procédé selon l'une quelconque des revendications 9 à 12, comportant une production de plusieurs nombres représentatifs de la source de données analogiques en utilisant chaque nombre produit comme les données analogiques à partir desquelles on produit un autre nombre représentatif, ainsi qu'une récupération dans chaque opération de production de nombre des données de transformation associées.

14. Procédé selon la revendication 13, dans lequel au moins deux des nombres représentatifs sont produits en utilisant des algorithmes de correction d'erreur différents.

15. Procédé selon l'une quelconque des précédentes revendications, dans lequel chaque élément de données des données analogiques est représenté par une pluralité de chiffres binaires.

16. Dispositif de stockage stockant des instructions incluant des instructions destinées à provoquer l'exécution par un dispositif programmable d'un procédé selon l'une quelconque des précédentes revendications.

17. Signal acheminant des instructions incluant des instructions destinées à provoquer l'exécution par un dispositif programmable d'un procédé selon l'une quelconque des revendications 1 à 15.

18. Dispositif destiné à produire un nombre représentatif d'une source (1) de données analogiques conjointement à des données de correction d'erreur pour ledit nombre, le dispositif comportant :
un moyen de réception de données analogiques représentatives de la source de données analogiques, lesdites données analogiques comportant une pluralité d'éléments de données ayant chacun une valeur à plusieurs chiffres ;
un moyen (145) de traitement des données analogiques reçues pour former une pluralité de groupes de chiffres, chaque groupe de chiffres étant formé en extrayant à partir de chaque élément de données des données analogiques la valeur du chiffre dans une position de chiffre respective différente de la valeur à plusieurs chiffres ;
un moyen de formation d'une pluralité de nombres intermédiaires, chaque nombre intermédiaire étant formé en traitant un ou plusieurs des groupes de chiffres ;
un moyen (25, 109) d'application, pour chacun des nombres intermédiaires, d'un algorithme de correction d'erreur respectif afin de former des données de correction d'erreur associées ; et
un moyen, de production dudit nombre représentatif de la source analogique en combinant la pluralité de nombres intermédiaires.

19. Dispositif selon la revendication 18, dans lequel pour au moins deux des nombres intermédiaires, ledit moyen d'application peut être mis en oeuvre pour appliquer des algorithmes de correction d'erreur différents respectifs afin de produire les données de correction d'erreur correspondantes.

20. Dispositif selon les revendications 18 ou 19, comportant de plus :
un moyen (21) de traitement de chacun desdits groupes de chiffres pour former des premier et deuxième ensembles de données respectifs, où le premier ensemble de données est utilisé pour former un nombre intermédiaire ;
un moyen (31) de production de données de transformation pour transformer ledit deuxième ensemble de données ou lesdits deuxièmes ensembles de données associés à un nombre intermédiaire à l'intérieur des données de correction d'erreur associées au nombre intermédiaire ; et
un moyen (157a, 157b) de stockage desdites données de transformation.

21. Dispositif selon la revendication 20, comportant un moyen (107, 29b, 31b) de répétition plusieurs fois de la production et du stockage de données de transformation, avec le premier ensemble de données formant à un moment les données analogiques pour le moment suivant.

22. Dispositif selon la revendication 21, dans lequel ledit moyen de répétition peut être mis en oeuvre pour utiliser différents algorithmes de correction d'erreur pour au moins deux desdits plusieurs moments de production et de stockage de données de transformation.

23. Dispositif selon l'une quelconque des revendications 20 à 22, comportant de plus :
un moyen de prédiction d'un taux de défauts des données analogiques reçues ; et
un moyen de sélection d'une méthodologie de correction d'erreur conformément au taux de défauts prédit.

24. Dispositif de production d'un nombre représentatif d'une source de données analogiques, le dispositif comportant :
un moyen de réception de données analogiques représentatives de la source de données analogiques, lesdites données analogiques comportant une pluralité d'éléments de données ayant chacun une valeur à plusieurs chiffres ;
un moyen (145) de traitement des données analogiques reçues pour former une pluralité de groupes de chiffres, chaque groupe de chiffres étant formé en extrayant à partir de chaque élément de données des données analogiques la valeur du chiffre dans une position de chiffre différente respective de la valeur à plusieurs chiffres ;
un moyen (61) de formation d'une pluralité de nombres intermédiaires, chaque nombre intermédiaire étant formé en traitant un ou plusieurs des groupes de chiffres ;
un moyen (69) de récupération, pour chaque nombre intermédiaire, de données de correction d'erreur correspondantes ;
un moyen (65, 127) de correction de chaque nombre intermédiaire en utilisant les données de correction d'erreur correspondantes et un algorithme de correction d'erreur afin de former un nombre intermédiaire corrigé ; et
un moyen de combinaison desdits nombres intermédiaires corrigés pour former le nombre représentatif de la source analogique.

25. Dispositif selon la revendication 24, dans lequel ledit moyen de correction peut être mis en oeuvre pour appliquer différents algorithmes de correction d'erreur respectifs pour au moins deux des nombres intermédiaires.

26. Dispositif selon la revendication 24 ou 25, comportant de plus un moyen de traitement de chacun desdits groupes de chiffres pour former des premier et deuxième ensembles de données respectifs,
dans lequel ledit moyen de formation peut être mis en oeuvre pour former la pluralité de nombres intermédiaires en traitant les premiers ensembles de données, et
dans lequel ledit moyen de récupération peut être mis en oeuvre pour récupérer des données de transformation à partir d'un stock de données pour chaque groupe de chiffres, et pour transformer les deuxièmes ensembles de données en des données de correction d'erreur en utilisant les données de transformation récupérées.

27. Dispositif selon la revendication 26, dans lequel le processeur de données peut être mis en oeuvre pour recevoir un nombre produit comme un nouvel ensemble de données analogiques afin de produire un autre nombre représentatif.

28. Dispositif selon la revendication 27, dans lequel au moins deux des nombres représentatifs sont produits en utilisant différents algorithmes de correction d'erreur.

29. Dispositif selon l'une quelconque des revendications 26 à 28, comportant de plus un identificateur (171) d'élément de données suspect pouvant être utilisé pour identifier les éléments de données des données analogiques qui contiennent des erreurs comme des éléments de données suspects.

30. Dispositif selon la revendication 29, comportant de plus :
un moyen d'affectation de toutes les combinaisons possibles de valeurs à un ou plusieurs chiffres des éléments de données suspects ;
dans lequel le correcteur d'erreur peut être mis en oeuvre, pour chaque combinaison de valeurs, i) pour déterminer le nombre intermédiaire résultant ainsi que des données de correction d'erreur associées, et ii) pour appliquer l'algorithme de correction d'erreur au nombre intermédiaire résultant afin de produire un nombre corrigé, et iii) pour sélectionner la valeur la plus commune du nombre corrigé afin de produire le nombre représentatif de la source analogique.

31. Dispositif selon la revendication 29 ou 30, comportant de plus un magasin (155a, 155b) de données pouvant être mis en oeuvre pour stocker des données identifiant les éléments de données suspects afin de tracer des erreurs dans les données analogiques.

32. Dispositif selon l'une quelconque des revendications 18 à 31, dans lequel chaque élément de données des données analogiques est représenté par une pluralité de chiffres binaires.
